(19) Europäisches Patentamt / European Patent Office / Office européen des brevets

(11) **EP 4 765 970 A1**

(12) **EUROPEAN PATENT APPLICATION**
published in accordance with Art. 153(4) EPC

(43) Date of publication:
**24.06.2026 Bulletin 2026/26**

(21) Application number: **24863154.1**

(22) Date of filing: **03.09.2024**

(51) International Patent Classification (IPC):
**H04W 68/02** (2009.01)    **H04W 52/02** (2009.01)
**H04W 76/28** (2018.01)

(52) Cooperative Patent Classification (CPC):
**H04W 52/02; H04W 68/02; H04W 76/28;**
**Y02D 30/70**

(86) International application number:
**PCT/KR2024/013246**

(87) International publication number:
**WO 2025/053573 (13.03.2025 Gazette 2025/11)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:    07.09.2023   KR 20230119170
                  26.01.2024   KR 20240012593

(71) Applicant: **Samsung Electronics Co., Ltd.**
**Suwon-si, Gyeonggi-do 16677 (KR)**

(72) Inventors:
- **CHOI, Seunghoon**
  **Suwon-si Gyeonggi-do 16677 (KR)**
- **RYU, Hyunsuk**
  **Suwon-si Gyeonggi-do 16677 (KR)**
- **YANG, Hyewon**
  **Suwon-si Gyeonggi-do 16677 (KR)**
- **LEE, Jaewon**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND APPARATUS FOR RECEIVING PEI OF TERMINAL HAVING WAKE-UP RECEIVER IN WIRELESS COMMUNICATION SYSTEM**

(57)    The present disclosure relates to a 5G or 6G communication system for supporting a higher data transmission rate. More specifically, according to various embodiments of the present disclosure, a method performed by a terminal in a wireless communication system may comprise the steps of: receiving, from a base station, a wake-up signal (WUS) indicating a first subgroup of a plurality of terminals; receiving, from the base station, a paging early indication (PEI) indicating a second subgroup of the plurality of terminals; and receiving, from the base station, a paging, if the terminal is included in the first subgroup and the second subgroup.

FIG.7

**Description**

[Technical Field]

The disclosure relates to a method and an apparatus for receiving a paging early indication (PEI) by a user equipment (UE) having a wake-up receiver in a wireless communication system. More particularly, the disclosure relates to a method and an apparatus for receiving a PEI by a UE having a wake-up receiver in order to resolve a problem of excessive power consumption of the UE and achieve high energy efficiency in a wireless communication system.

[Background Art]

5th generation (5G) mobile communication technologies define broad frequency bands such that high transmission rates and new services are possible, and can be implemented not only in "Sub 6 gigahertz (GHz)" bands such as 3.5GHz, but also in "Above 6GHz" bands referred to as mmWave including 28GHz and 39GHz. In addition, it has been considered to implement 6th generation (6G) mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive Multiple Input, Multiple Output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BandWidth Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step Random Access Channel (RACH) for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

As described above, with the evolution of wireless communication systems, there is a growing need for schemes related to signal transmission for terminals equipped with a wake-up receiver in order to address the problem of excessive power consumption in terminals and to achieve high energy efficiency.

[Disclosure of Invention]

[Technical Problem]

The disclosure relates to a wireless communication system and, more specifically, to operations of a terminal and a base station in a wireless communication system. In accordance with various embodiments, the disclosure are to provide an apparatus and a method capable of effectively providing services in a wireless communication system.

[Solution to Problem]

In accordance with various embodiments of the disclosure, a method performed by a user equipment (UE) in a wireless communication system includes receiving, from a base station, a wake-up signal (WUS) indicating a first subgroup of multiple UEs, in case that paging early indication (PEI) monitoring is activated, receiving, from the base station, a PEI indicating a second subgroup of multiple UEs, and receiving, from the base station, a paging, wherein the UE is included in the first subgroup or the second subgroup.

[Advantageous Effects of Invention]

The disclosure provides an apparatus and a method capable of effectively providing services in a wireless communication system.

Advantageous effects obtainable from the disclosure may not be limited to the above-mentioned effects, and other effects which are not mentioned herein may be clearly understood from the following description by those skilled in the art to which the disclosure pertains.

[Brief Description of the Drawings]

FIG. 1 illustrates a basic structure of a time-frequency resource domain in a wireless communication system according to various embodiments of the disclosure.

FIG. 2 illustrates a beam sweeping operation and a time domain mapping structure of a synchronization signal according to various embodiments of the disclosure.

FIG. 3 illustrates a flow of signals for performing a random access (RA) according to various embodiments of the disclosure.

FIG. 4 illustrates a flow of signals used by a UE to report UE capability information to a base station according to various embodiments of the disclosure.

FIG. 5 illustrates an example of state transitions of a base station and a UE and a state of the UE according to a base station state, according to various embodiments of the disclosure.

FIG. 6 illustrates an example of a scheme of distinguishing groups of a UE having a wake-up receiver according to various embodiments of the disclosure.

FIG. 7 illustrates another example of a scheme of distinguishing groups of a UE having a wake-up receiver according to various embodiments of the disclosure.

FIG. 8 illustrates an example of a scheme of receiving a paging early indication (PEI) of a UE having a wake-up receiver according to various embodiments of the disclosure.

FIG. 9 is a flow chart illustrating an operation by a UE having a wake-up receiver for receiving a PEI according to various embodiments of the disclosure.

FIG. 10 is a flow chart illustrating an operation by a base station for transmitting a PEI according to various embodiments of the disclosure.

FIG. 11 illustrates a functional structure of a UE according to various embodiments of the disclosure.

FIG. 12 illustrates a functional structure of a base station according to various embodiments of the disclosure.

[Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operations to be performed on the computer or other programmable apparatus to produce a computer implemented process such that the instructions that execute on the computer or other programmable apparatus provide operations for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit," or divided into a larger number of elements, or a "unit." Moreover, the elements and "units" may be implemented to reproduce one or more central processing units (CPUs) within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, various embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal." For example, the term "physical downlink shared channel (PDSCH)" refers to a physical channel over which data is transmitted, but the PDSCH may also be used to refer to the "data." That is, as used herein, the expression "transmit ting a physical channel" may be construed as having the same meaning as the expression "transmitting data or a signal over a physical channel."

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications. In addition, the term "terminal" may refer to not only cellular phones, smartphones, IoT devices, and sensors, but also other wireless communication devices.

In the following description, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above. Furthermore, in the following description of various embodiments, systems based on long term evolution (LTE), LTE-advanced (LTE-A), or NR may be described by way of example, but various embodiments of the disclosure may also be applied to other communication systems having similar technical backgrounds or channel types. In addition, based on determinations by those skilled in the art, the disclosure may also be applied to other communication systems through some modifications without significantly departing from the scope of the disclosure.

In order to process mobile data traffic which has recently increased exponentially, initial standards of new radio (NR) access technology or 5th generation (5G) systems which are next-generation communication systems after long term evolution (LTE) (or evolved universal terrestrial radio access (E-UTRA)) and LTE-advanced (LTE-A) (or E-UTRA evolution) have been completed. While legacy mobile communication systems have focused on conventional voice/data communication, 5G systems aim to satisfy various services and requirements, such as an enhanced mobile broadband (eMBB) service for improving legacy voice/data communication, an ultra-reliable and low latency communication (URLLC) service, and a massive machine type communication (MTC) service supporting massive machine-to-machine communication.

The system transmission bandwidth per single carrier of legacy LTE and LTE-A is limited to a maximum of 20MHz, but 5G systems aim to provide super-fast data services up to multiple Gbps by using super-broad bandwidths far wider than the same. Accordingly, 5G systems consider ultrahigh-frequency bands ranging from multiple GHz to a maximum of 100 GHz, in which it is relatively easy to secure ultrawide -bandwidth frequencies, as candidate frequencies. Additionally, it is possible to secure broad-bandwidth frequencies for 5G systems through frequency rearrangement or allocation among frequency bands ranging from hundreds of MHz to multiple GHz used in legacy mobile communication systems.

Radio waves in ultrahigh frequency bands have millimeter-level wavelengths and thus are also referred to as millimeter waves (mmWave). However, the pathloss of radio waves in ultrahigh frequency bands increases in proportion to the frequency band, thereby reducing the coverage of the mobile communication systems.

In order to overcome the shortcoming of coverage reduction in ultrahigh frequency bands, a beamforming technology is applied such that the distance reached by radio waves is increased by concentrating the energy radiated by the radio waves at a specific target point by using multiple antennas. That is, signals to which the beamforming technology is applied have a smaller beam width, and radiated energy is concentrated within the smaller beam width, thereby increasing the distance reached by radio waves. The beamforming technology may be applied to each of the transmission and reception ends. In addition to the increased coverage, the beamforming technology is also advantageous in that interference is reduced in regions in directions other than the beamforming direction. Appropriate operations of the beamforming technology require a method for accurately measuring transmitted/received beams and sending feedback. The beamforming technology may be applied to a control channel or a data channel having one-to-one correspondence between a UE and a base station. In addition, the beamforming technology may also be applied to a control channel and a data channel for transmitting a common signal transmitted from a base station to multiple UEs in the system, such as a synchronization signal, a physical broadcast channel (PBCH), and system information, in order to increase the coverage. When the beamforming technology is applied to a common signal, a beam sweeping technology is additionally applied such that the signal is transmitted after changing the beam direction, thereby ensuring that the common signal can reach a UE existing at a specific location inside the cell.

As another requirement of 5G systems, an ultra-low latency service is required such that the transmission delay between the transmission and reception ends is about 1ms. In an attempt to reduce the transmission delay, there is a need for frame structure design based on a shorter transmission time interval (TTI) than LTE and LTE-A. The TTI is the basic time unit for performing scheduling, and legacy LTE and LTE-A have a TTI of 1ms, which corresponds to the length of one subframe. For example, the short TTI, on which 5G systems are based in order to meet the requirement regarding the ultra-low latency service, may be 0.5ms, 0.25ms, 0.125ms, or the like, which is shorter than legacy LTE and LTE-A.

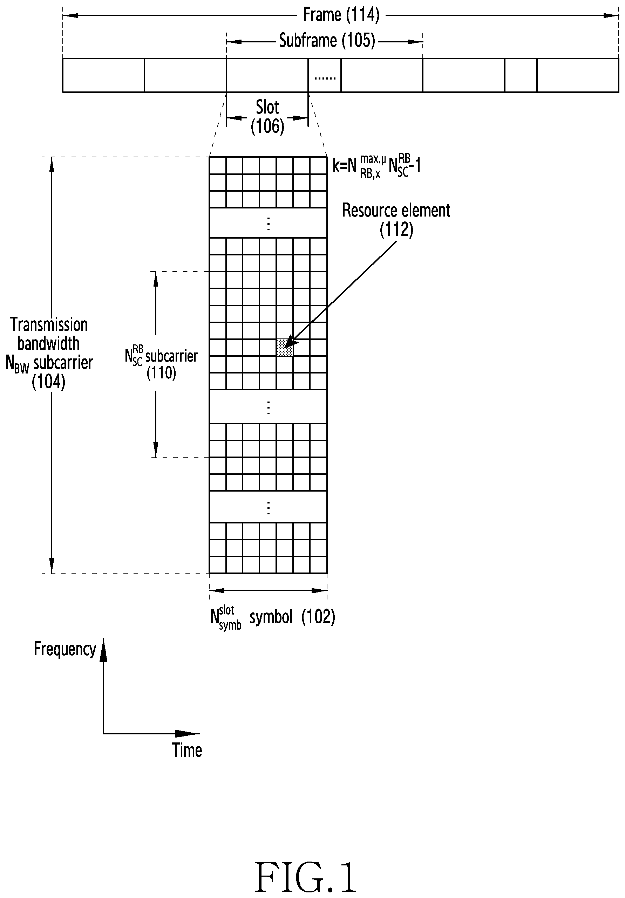

FIG. 1 illustrates a basic structure of a time-frequency resource domain in a wireless communication system according to an embodiment of the disclosure. More specifically, FIG. 1 illustrates the basic structure of a time-frequency resource domain which is a radio resource domain used to transmit data or control channels in a 5G system.

Referring to FIG. 1, the horizontal axis in FIG. 1 denotes the time domain, and the vertical axis denotes the frequency domain. The minimum transmission unit in the time domain of the 5G system is an orthogonal frequency division multiplexing (OFDM) symbol, a group of $N_{symb}^{slot}$ symbols 102 may constitute one slot 106, and a group of $N_{slot}^{subframe}$ slots may constitute one subframe 105. The length of a subframe may be 1.0ms, and a group of ten subframes may constitute a 10ms frame 114. The minimum transmission unit in the frequency domain is a subcarrier, and a total of $N_{BW}$ subcarriers 104 may constitute the entire system transmission bandwidth.

The basic unit of resources in the time-frequency domain is a resource element (RE) 112, which may be represented by an OFDM symbol index and a subcarrier index. A resource block (RB) or a physical resource block (PRB) may be defined by consecutive $N_{sc}^{RB}$ subcarriers 110 in the frequency domain. In the 5G system, $N_{sc}^{RB} = 12$, and the data rate may increase in proportion to the number of RBs scheduled for a UE.

In wireless communication systems, a base station may map data at the RB level, and may generally schedule RBs constituting one slot with regard to a specific UE. That is, the basic time unit to perform scheduling in 5G systems may be a slot, and the basic frequency unit to perform scheduling may be an RB.

The number of OFDM symbols, $N_{symb}^{slot}$, is determined according to the length of a cyclic prefix (CP) which is added to each symbol in order to prevent inter-symbol interference. For example, if a normal CP is applied, $N_{symb}^{slot} = 14$ and, if an extended CP is applied, $N_{symb}^{slot} = 12$. The extended CP is applied to a system having a longer radio-wave transmission distance than the normal CP, thereby maintaining inter-symbol orthogonality. In the case of the normal CP, the ratio between the CP length and the symbol length may be maintained at a constant value such that the overhead due to the CP remains constant regardless of the subcarrier spacing. That is, the symbol length may increase if the subcarrier spacing decreases, thereby increasing the CP length. To the contrary, the symbol length may decrease if the subcarrier spacing increases, thereby decreasing the CP length. The symbol length and the CP length may be inversely proportional to the subcarrier spacing.

In order to satisfy various services and requirements in wireless communication systems, various frame structures may be supported by adjusting the subcarrier spacing. For example, in terms of the operating frequency band, the larger the subcarrier spacing, the more advantageous for restoration of phase noise in high-frequency bands. In terms of the transmission time, the larger the subcarrier spacing, the smaller the symbol length in the time domain, and thus the resulting smaller slot length makes it more advantageous to support an ultra-low-latency service such as ultra-reliable low-latency communications (URLLC). In terms of the cell size, the larger the CP length, the larger cell can be supported, meaning that the smaller the subcarrier spacing, the larger cell can be supported. The term "cell" is a concept referring to a region covered by one base station in connection with mobile communication.

The subcarrier spacing, the CP length, and the like correspond to information indispensable to OFDM transmission/reception, and a base station and a UE need to recognize the subcarrier spacing, the CP length, and the like as mutually common values such that efficient transmission/reception is possible.

Table 1 below describes the relationship between the subcarrier spacing configuration ($\mu$), the subcarrier spacing ($\Delta f$), and the CP length supported in 5G systems.

Table 1

| $\mu$ | $\Delta f = 2^{\mu} \cdot 15$ [$kHz$] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 2 below enumerates the number ($N_{symb}^{slot}$) of symbols per one slot, the number ($N_{symb}^{slot}$) of slots per one frame, and the number ($N_{slot}^{subframe,\mu}$) of slots per one subframe with regard to each subcarrier spacing configuration ($\mu$) in the case of a normal CP.

Table 2

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 below enumerates the number ($N_{symb}^{slot}$) of symbols per one slot, the number ($N_{slot}^{frame,\mu}$) of slots per one frame, and the number ($N_{slot}^{subframe,\mu}$) of slots per one subframe with regard to each subcarrier spacing configuration ($\mu$) in the case of an extended CP.

Table 3

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In the early phase of introduction of 5G systems, coexistence with legacy LTE and/or LTE-A (hereinafter, referred to as LTE/LTE-A) or dual mode operation has been expected. Accordingly, legacy LTE/LTE-A may provide UEs with stable system operations, and the 5G systems may play the role of providing UEs with improved services. Therefore, the frame structure of 5G systems needs to include at least the frame structure of LTE/LTE-A or an essential parameter set (subcarrier spacing = 15kHz).

For example, a comparison between a frame structure having a subcarrier spacing configuration $\mu$=0 (hereinafter, referred to as frame structure A) and a frame structure having a subcarrier spacing configuration $\mu$=1 (hereinafter, referred to as frame structure B) shows that, compared with frame structure A, frame structure B has double the subcarrier spacing and the RB size, and has half the slot length and the symbol length. In the case of frame structure B, two slots may constitute one subframe, and 20 subframes may constitute one frame.

To generalize the frame structure of 5G systems, the subcarrier spacing, the CP length, the slot length, and the like, which constitute a necessary parameter set, of respective frame structures are related so as to correspond to integer multiples with each other, thereby providing a high degree of extendibility. In addition, a subframe having a fixed length of 1ms may be defined to represent a reference time unit unrelated to the frame structure.

The frame structure may be applied according to various scenarios. In terms of the cell size, the larger the CP length, the larger cells can be supported, meaning that frame structure A may support larger cells than frame structure B. In terms of the operating frequency band, the larger the subcarrier spacing, the more advantageous for restoration of phase noise in high-frequency bands. Therefore, frame structure B can support higher operating frequencies than frame structure A. In terms of services, the smaller the slot length (basic time unit of scheduling), the more advantageous to supporting a super-low-latency service such as URLLC, meaning that frame structure B may be more appropriate for an URLLC service than frame structure A.

As used in the following description of the disclosure, the uplink may refer to a radio link via which a UE transmits data or control signals to a base station, and the downlink may refer to a radio link via which the base station transmits data or control signals to the UE.

In an initial access operation in which the UE initially accesses a system, the UE may perform downlink time and frequency domain synchronization and acquire a cell identifier (ID) from a synchronization signal, transmitted by a base station, through a cell search. The UE may receive a physical broadcast channel (PBCH) by using the acquired cell ID and acquire a master information block (MIB) as mandatory system information from the PBCH. Additionally, the UE may receive system information (system information block (SIB)) transmitted by the base station to acquire cell-common transmission and reception-related control information. The cell-common transmission and reception-related control information may include random access (RA)-related control information, paging-related control information, common control information for various physical channels, etc.

A synchronization signal is a signal that serves as a reference for a cell search, and for each frequency band, a subcarrier spacing may be applied adaptively to a channel environment, such as phase noise. For a data channel or a control channel, in order to support various services as described above, a subcarrier spacing may be applied adaptively depending on a service type.

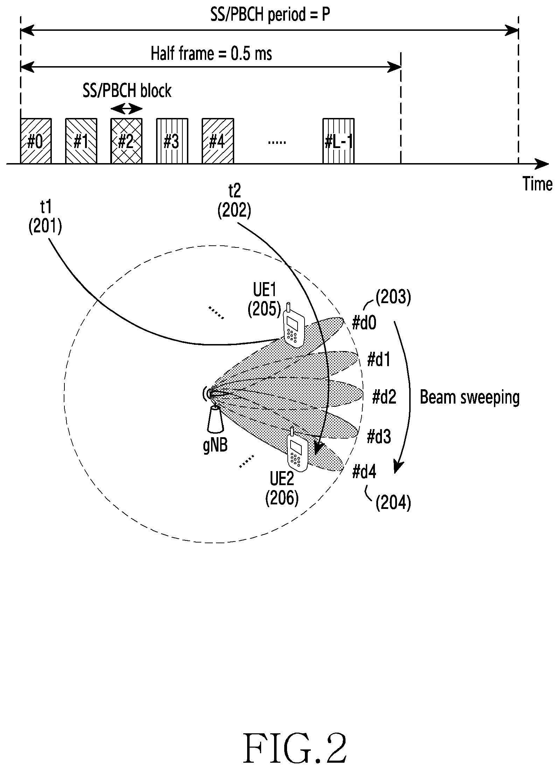

FIG. 2 illustrates a beam sweeping operation and a time domain mapping structure of a synchronization signal according to various embodiments of the disclosure.

For description purposes, the following elements may be defined in advance.

- Primary synchronization signal (PSS): A PSS is a signal that serves as a reference for DL time/frequency synchronization, and provides a part of cell ID information.
- Secondary synchronization signal (SSS): An SSS may serve as a reference for DL time/frequency synchronization, and may provide the other part of the cell ID information. Additionally, the SSS may serve as a reference signal for PBCH demodulation of a PBCH.
- Physical broadcast channel (PBCH): A PBCH may provide a master information block (MIB) which is mandatory system information required for transmission and reception of a data channel and a control channel of a terminal. The mandatory system information may include search space-related control information indicating radio resource mapping information of a control channel, scheduling control information for a separate data channel for transmission of system information, a system frame number (SFN) which is a frame unit index that serves as a timing reference, and other information.
- Synchronization signal/PBCH block (SS/PBCH block) or SSB: An SS/PBCH block may be configured by N OFDM symbols and may include a combination of a PSS, an SSS, a PBCH, etc. For a system to which a beam sweeping technology is applied, an SS/PBCH block may be a minimum unit to which beam sweeping is applied. In the 5G system, N=4 may be satisfied. A base station may transmit up to a maximum of L SS/PBCH blocks, and the L SS/PBCH blocks may be mapped within a half frame (0.5ms). The L SS/PBCH blocks may be periodically repeated at predetermined periods P. The base station may inform a UE of period P via signaling. If there is no separate signaling of period P, the UE may apply a previously agreed default value.

FIG. 2 illustrates an example in which beam sweeping is applied in units of SS/PBCH blocks over time. In the example of FIG. 2, UE 1 205 may receive an SS/PBCH block by means of a beam emitted in direction #d0 203 by beamforming applied to SS/PBCH block #0 at time point t1 201. In addition, UE 2 206 may receive an SS/PBCH block by means of a beam emitted in direction #d4 204 by beamforming applied to SS/PBCH block #4 at time point t2 202. The UE may acquire, from the base station (gNB), an optimal synchronization signal via a beam emitted in the direction where the UE is located. For example, it may be difficult for UE 1 205 to acquire time/frequency synchronization and mandatory system information from the SS/PBCH block through the beam emitted in direction #d4 far away from the location of UE 1.

In addition to the initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an SS/PBCH block of the adjacent cell in order to determine the radio link quality of the adjacent cell and acquire time/frequency synchronization with the adjacent cell.

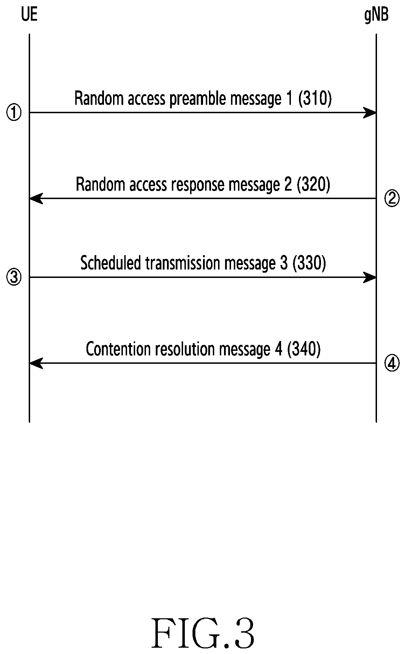

After acquiring an MIB and system information from the base station through the initial access procedure, the UE may perform a random access procedure in order to switch a link to the base station to a connected state (or RRC_CONNECTED state). Upon completing the random access procedure, the UE switches to a connected state in which one-to-one communication between the base station and the UE is possible. Hereinafter, a random access procedure will be described in detail with reference to FIG. 3.

FIG. 3 illustrates a flow of signals for performing a random access (RA) according to various embodiments of the disclosure.

Referring to FIG. 3, in operation 310, the UE may transmit a random access preamble to the base station (gNB). The random access preamble, which is a message initially transmitted by the UE in the random access procedure, may be referred to as message 1. The gNB may measure the transmission delay value between the UE and the gNB from the random access preamble, and may conduct uplink synchronization. The UE may arbitrarily select which random access preamble is to be used, from a random access preamble set given by system information in advance. The initial transmission power of the random access preamble may be determined by the pathloss between the gNB and the UE, measured by the UE. Furthermore, the UE may determine the transmission beam direction of the random access preamble from a synchronization signal received from the gNB, thereby transmitting the random access preamble.

In operation 320, gNB may transmit a random access response (RAR) (or message 2) regarding the random access preamble received in operation 310. The gNB may transmit an uplink transmission timing adjustment command to the UE, based on a transmission delay value measured from the random access preamble. The gNB may transmit a power control command and an uplink resource to be used by the UE, as scheduling information, to the UE. The scheduling information transmitted by the gNB may include control information regarding the UE's uplink transmission beam.

According to an embodiment, if the UE fails to receive a random access response (RAR) (or message 2) which is scheduling information regarding message 3 from the gNB within a predetermined time in operation 320, the UE may perform operation 310 again. When performing operation 310 again, the UE may transmit the random access preamble after increasing the transmission power thereof by a predetermined operation (e.g., power ramping), thereby increasing the probability that the gNB will receive the random access preamble.

In operation 330, the UE may transmit uplink data (i.e., message 3) including the UE's ID to the gNB by using the uplink resource allocated thereto in operation 320. The UE may transmit uplink data including the UE's ID to the gNB through a physical uplink shared channel (PUSCH). According to an embodiment, the transmission timing of the PUSCH for transmitting message 3 may follow the timing control command received from the gNB in operation 320. According to an embodiment, the transmission power of the PUSCH for transmitting message 3 may be determined in consideration of a power control command received from the gNB in operation 320 and the random access preamble's power ramping value. According to an embodiment, the PUSCH for transmitting message 3 may refer to an uplink data signal initially transmitted to the gNB by the UE after the UE has transmitted a random access preamble.

In operation 340, upon determining that the UE has performed a random access without contention with other UEs, the gNB may transmit data (message 4) including the ID of the UE which has transmitted uplink data in 330 to the UE. According to an embodiment, upon receiving the signal transmitted by the gNB in operation 340 from the gNB, the UE may determine that the random access has succeeded. According to an embodiment, the UE may transmit hybrid automatic repeat request acknowledgement (HARQ-ACK) information to the gNB through a physical uplink control channel (PUCCH) to indicate whether or not message 4 has been received successfully.

According to an embodiment, in case that data transmitted by the UE in operation 330 has contended with data from another UE, and the gNB has thus failed to receive data signals from the UE, the gNB may no longer transmit data to the UE. According to an embodiment, if the UE fails to receive data transmitted from the gNB in operation 340 within a predetermined time, the UE may determine that the random access procedure has failed and may restart from operation 310.

According to an embodiment, upon successfully completing the random access procedure, the UE may be switched to a connected state (or RRC_CONNECTED state), and one-to-one communication between the gNB and the UE may become possible. According to an embodiment, the gNB may receive UE capability information reported by the UE in the connected state (or RRC_CONNECTED state), and may adjust the scheduling with reference to the UE capability information from the UE. According to an embodiment, the UE may inform the gNB of whether the UE itself supports a specific function or not, the maximum allowed value of the function supported by the UE, and the like through the UE capability information. Therefore, UE capability information reported to the gNB by each UE may have a different value with regard to each UE.

As an example, the UE may report UE capability information including at least one of the following pieces of control information to the gNB.

- Control information regarding the frequency band supported by the UE
- Control information regarding the channel bandwidth supported by the UE
- Control information regarding the maximum modulation scheme supported by the UE
- Control information regarding the maximum number of beams supported by the UE
- Control information regarding the maximum number of layers supported by the UE
- Control information regarding CSI reporting supported by the UE
- Control information regarding whether the UE supports frequency hopping
- Control information regarding the bandwidth when carrier aggregation (CA) is supported
- Control information regarding whether cross-carrier scheduling is supported when CA is supported

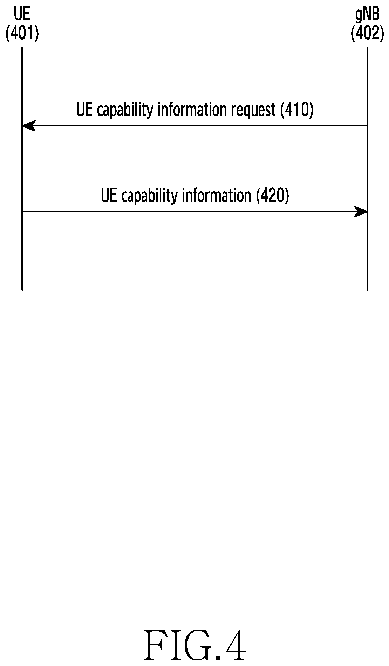

FIG. 4 illustrates a flow of signals used by a UE to report UE capability information to a base station (gNB) according to various embodiments of the disclosure.

Referring to FIG. 4, in operation 410, the gNB 402 may transmit a UE capability information request message to the UE 401.

In operation 420, the UE 401 may transmit UE capability information to the gNB 402, based on the UE capability information request of the gNB 402. According to an embodiment, the UE 401 may transmit UE capability information to the gNB 402 regardless of the UE capability information request of the gNB 402.

According to various embodiments, based on the process in which UE capability information is transmitted/received, the UE connected to the gNB may conduct one-to-one communication with the gNB in the RRC_CONNECTED state.

According to an embodiment, a UE having no connection may be in an RRC_IDLE state, and the UE in the RRC_IDLE state may perform processes as given below.

- Perform a UE-specific discontinuous reception (DRX) cycle operation configured by the upper layer
- Receive a paging message from the core network
- Acquire system information
- A measurement operation related to the serving cell (or the cell on which the same is camping) and cell selection/reselection
- A neighboring cell-related measurement operation and cell reselection
- Receive paging early indication (PEI)

According to an embodiment, to describe, in more detail, a serving cell (or a camped cell)-related measurement operation and cell selection/reselection, the UE may measure synchronization signal (SS)-reference signal received power (RSRP) and SS-reference signal received quality (RSRQ) levels for the serving cell (or the camped cell) at least every M1*N1 DRX cycles. The UE may evaluate a cell selection determination criterion S, based on the measured value. In this case, when an SSB-based measurement timing configuration (SMTC) period is greater than 20ms and a DRX cycle is less than or equal to 0.64 s, M1 may be 2, and otherwise, M1 may be 1.

In addition, N1 may be determined by Table 4 below.

Table 4

| DRX cycle[s] | N1 | | | $N_{serv}$ [number of DRX cycles] |
| --- | --- | --- | --- | --- |
| | FR1 | FR2-1 | FR2-2 | |
| 0.32 | 1 | 8 | 12 | M1*N1*4 |
| 0.64 | | 5 | 8 | M1*N1*4 |
| 1.28 | | 4 | 6 | N1*2 |
| 2.56 | | 3 | 5 | N1*2 |

The cell selection determination criterion S can be satisfied in case of $S_{rxlev} > 0$ corresponding to the SS-RSRP and in case of $S_{qual} > 0$ corresponding to the SS-RSRQ.

According to an embodiment, $S_{rxlev}$ and $S_{qual}$ may be expressed as follows.

$$S_{rxlev} = Q_{rxlevmeas} - (Q_{rxlevmin} + Q_{rxlevminoffset}) - P_{compensation} - Q_{offsettemp}$$

$$S_{qual} = Q_{qualmeas} - (Q_{qualmin} + Q_{qualminoffset}) - Q_{offsettemp}$$

Here, $Q_{rxlevmeas}$ may indicate the measured SS-RSRP, and $Q_{qualmeas}$ may indicate the measured SS-RSRQ. According to an embodiment, $Q_{rxlevmin}$ may be the minimum required received signal strength level in the serving cell, and may be received by the UE as system information. $Q_{qualmin}$ may be the minimum required received signal quality level in the serving cell, and may be received by the UE as system information. The remaining parameters may be substantially identical to the parameters presented in 3GPP TS 38.304. In determining the measured SS-RSRP, the UE may determine the measured SS-RSRP by performing filtering based on at least two measurement values that are at least half of the DRX cycle apart. In addition, in determining the measured SS-RSRQ, the UE may determine the SS-RSRQ of the serving cell by performing filtering based on at least to measurement values that are at least half of the DRX cycle apart.

When the UE determines that the serving cell has not satisfied the cell selection determination criterion S for $N_{serv}$ consecutive DRX cycles, the UE may initiate measurement of all neighboring cells except for the serving cell. When the UE fails to find a new suitable cell for 10 seconds, the UE may initiate a cell selection procedure for a selected public land mobile network (PLMN).

Hereinafter, receiving a paging message from a core network by a UE is described in more detail. According to an embodiment, the UE may monitor one paging occasion (PO) (e.g., a paging location) during a DRX cycle. The PO may be a set of PDCCH monitoring occasions, and may include multiple time slots (or subframes or OFDM symbols) in which paging control information can be transmitted and received. A paging frame (PF) may be one radio frame (e.g., 10ms), and may include one or multiple POs or a starting point (e.g., offset) of the PO.

According to an embodiment, the PF and the PO may be determined by the following equation.

A system frame number (SFN) for the PF may be determined by (SFN + PF_offset) mod T = (T div N)*(UE_ID mod N), wherein PF_offset indicates an offset for PF determination, T indicates a DRX cycle, and N indicates the number of (e.g., cell-specific) PFs per DRX cycle, which may be determined by a higher-layer signal such as system information, and UE_ID, as a UE ID (e.g., 5G-S-TMSI), may be determined by a core network.

According to an embodiment, the PFs determined by N may indicate the paging frame commonly applied to the UEs in the cell, and hereinafter, for convenience of description, the PFs may be referred to as a common PF.

According to an embodiment, i_s indicating a PO index may be determined by i_s = floor (UE_ID/N) mod Ns, and here, Ns may indicate the number of POs in one PF, and may be determined by a higher-layer signal such as system information.

For example, when it is assumed that PF_offset=3, T=128, N=T/4=32, Ns=4, UE_ID mod 32 is 1, and floor (UE_ID/32) mod 4 is 1, the values of the parameters may be determined by the following equation.

$$(SFN + 3) \bmod 128 = (128 \text{ div } 32)*(UE\_ID \bmod 32) = 4*1 = 4,$$

$$i\_s = floor (UE\_ID/32) \bmod 4 = 1$$

Therefore, a paging frame (PF) to be received by a UE having the above-described UE_ID may be determined as a radio frame in which the SFN is 1, 129, 257, ..., among cell-common PFs, and as a PO, the (i_s + 1)$^{th}$ PO among four POs in the PF may be determined.

Hereinafter, reception of a paging early indication (PEI) is described in more detail. According to an embodiment, in order to reduce UE power consumed during monitoring and reception of a paging control channel and a paging data channel in each DRX cycle, the UE may receive a PEI. According to an embodiment, the PEI may include a bit field for indicating multiple paging occasions per PEI and multiple subgroups per paging occasion. A UE subgroup supporting the PEI may be specified by a core network (CN) via non-access stratum (NAS) signaling (e.g., by an access and mobility management function (AMF) entity), or may be determined based on a parameter by system information and a UE ID. The UE may receive the PEI to determine whether a subgroup to which the UE belongs is indicated by "1" in a paging occasion in which the UE needs to perform reception, and when the subgroup is indicated by "1," the UE may receive paging information in the paging occasion. When the subgroup is indicated by "0," the UE may skip receiving paging information.

According to an embodiment, when a set of tracking reference signal (TRS) occasions are provided to a UE in an RRC_IDLE or RRC_INACTIVE state by system information trs-ResourceSetConfig, DCI format 1_0 having a CRC scrambled by P-RNTI and the PEI (e.g., DCI format 2_7) may include a TRS availability indication field. The UE may determine, from the TRS availability indication field, a TRS resource set which can be received in the cell, and may receive the TRS resource set to perform time/frequency synchronization, automatic gain control (AGC), channel estimation, etc.

According to various embodiments of the disclosure, the UE may monitor or receive one PEI occasion (PEI-O) before paging reception during the DRX cycle. In case that the UE receives PEI and the PEI indicates a paging occasion and a subgroup to which the UE belongs, the UE belonging to the subgroup may monitor the associated paging occasion (PO). If the UE is unable to detect the PEI at the PEI occasion, or the PEI does not indicate the paging occasion and the subgroup to which the UE belongs, the UE does not need to monitor the associated paging occasion (PO), thereby reducing UE power consumption.

According to an embodiment, the UE may determine a PEI occasion in the following manner. The PEI occasion may be separated backward by a subframe offset based on a radio frame of a reference point separated forward by pei-FrameOffset based on a PF including an associated PO. The UE may monitor PEI in the PEI occasion determined in the manner described above. Here, the pei-FrameOffset, the subframe offset, etc. may be determined by a higher signal, such as system information.

According to various embodiments, in 5G systems, a UE in a new state called an RRC_INACTIVE UE has been defined to reduce the energy and time consumed for the UE's initial access. The RRC_INACTIVE UE may perform the following operations in addition to operations performed by an RRC_IDLE UE.

- Store access stratum (AS) information necessary for cell access
- A UE-specific DRX cycle operation configured by the RRC layer
- Configure a radio access network (RAN)-based notification area (RNA) which may be used during a handover by the RRC layer, and periodically performing update
- Monitor a RAN-based paging message transmitted through an inactive-radio network temporary identifier (I-RNTI)

According to an embodiment, the UE in the RRC_CONNECTED state may receive an RRC release indication from the gNB and may change from the RRC_CONNECTED state to an RRC_INACTIVE/RRC_IDLE state.

According to an embodiment, the UE in the RRC_INACTIVE/RRC_IDLE state may perform a random access, complete the entire random access procedure, and change from the RRC_INACTIVE/RRC_IDLE state to the RRC_CONNECTED state.

Hereinafter, a scheduling method in which the base station (gNB) transmits downlink data to the UE or indicates the UE's uplink data transmission, according to various embodiments of the disclosure, will be described.

According to an embodiment, downlink control information (DCI) may be control information transmitted from the gNB to the UE through the downlink. The DCI may include downlink data scheduling information or uplink data scheduling information regarding a specific UE. In general, the gNB may independently perform channel coding for each UE with regard to the DCI, and may transmit the same to each UE through a physical downlink control channel (PDCCH).

According to an embodiment, with regard to a UE to be scheduled, the base station may apply and operate a predetermined DCI format according to the purpose, such as whether the DCI is scheduling information regarding downlink data (downlink assignment), whether the DCI is scheduling information regarding uplink data (uplink grant), or whether the DCI is DCI for power control.

According to an embodiment, the gNB may transmit downlink data to the UE through a physical downlink shared channel (PDSCH). The gNB may inform the UE of scheduling information, such as power control information, HARQ-related control information, a modulation scheme, and a specific mapping position in the time and frequency domains of a PDSCH, via DCI related to downlink data scheduling information in the DCI transmitted via a PDCCH.

According to an embodiment, the UE may transmit uplink data to the gNB through a physical uplink shared channel (PUSCH). The gNB may inform the UE of scheduling information, such as detailed mapping locations in time and frequency domains of the PUSCH, the modulation scheme, HARQ-related control information, and power control information, through DCI related to uplink data scheduling information among DCI transmitted through a PDCCH.

According to an embodiment, the time-frequency resource to which the PDCCH is mapped may be referred to as a control resource set (CORESET). The CORESET may be configured for all or part of a frequency resource in a bandwidth supported by the UE in the frequency domain. One or multiple OFDM symbols may be configured as the CORESET in the time domain, and this may be defined as a control resource set (CORESET) duration. The gNB may configure one CORESET or multiple CORESETs for the UE through higher layer signaling (for example, system information, master information block (MIB), radio resource control (RRC) signaling). The description that the gNB configures a CORESET for the UE may mean that the gNB provides the UE with information such as the CORESET identity, the CORESET's frequency location, and the CORESET's symbol length. Pieces of information provided from the gNB to the UE to configure a CORESET may include at least a part of the information included in Table 5 below:

Table 5

```
ControlResourceSet ::=        SEQUENCE {
    controlResourceSetId          ControlResourceSetId,
    frequencyDomainResources       BIT STRING (SIZE (45)),
    duration                      INTEGER (1..maxCoReSetDuration),
    cce-REG-MappingType            CHOICE {
        interleaved                  SEQUENCE {
            reg-BundleSize         ENUMERATED {n2, n3, n6},
            interleaverSize       ENUMERATED {n2, n3, n6},
            shiftIndex
INTEGER(0..maxNrofPhysicalResourceBlocks-1)        OPTIONAL -- Need
S
        },
        nonInterleaved                NULL
    },
    precoderGranularity            ENUMERATED {sameAsREG-bundle,
allContiguousRBs},
    tci-StatesPDCCH-ToAddList      SEQUENCE(SIZE (1..maxNrofTCI-
StatesPDCCH)) OF TCI-StateId OPTIONAL, -- Cond NotSIB1-initialBWP
    tci-StatesPDCCH-ToReleaseList  SEQUENCE(SIZE (1..maxNrofTCI-
StatesPDCCH)) OF TCI-StateId OPTIONAL, -- Cond NotSIB1-initialBWP
    tci-PresentInDCI              ENUMERATED {enabled}
OPTIONAL, -- Need S
    pdcch-DMRS-ScramblingID        INTEGER (0..65535)
OPTIONAL, -- Need S
}
```

According to an embodiment, the CORESET may be configured by $N_{RB}^{CORESET}$ RBs in the frequency domain and may be configured by $N_{symb}^{CORESET} \in \{1,2,3\}$ symbols in the time domain. An NR PDCCH may be configured by one or multiple control channel elements (CCEs). One CCE may be configured by six resource element groups (REGs), and each REG may be defined as one RB during one OFDM symbol. In one CORESET, REGs may be indexed, starting from REG index 0, in the time-first order from the first CORESET symbol/lowest RB of the CORESET.

According to an embodiment, as a PDCCH-related transmission method, an interleaved type and a non-interleaved type may be supported. The gNB may configure, for the UE, whether transmission is of the interleaved type or the non-interleaved type with regard to each CORESET through upper layer signaling. Interleaving may be performed at the REG bundle level. The REG bundle may be defined as one REG or a set of multiple REGs. The UE may determine the CCE-to-REG type in the corresponding CORESET, based on the configuration by the gNB regarding whether transmission is of the interleaved type or the non-interleaved type, in a manner as in Table 6 below.

Table 6

The CCE-to-REG mapping for a control-resource set can be interleaved or non-interleaved and is described by REG bundles:

- REG bundle $i$ is defined as REGs $\{iL,iL+1,...,iL+L\text{-}1\}$ where $L$ is the REG bundle size, $i = 0,1, ... , N_{REG}^{CORESET}/L - 1$ , and $N_{REG}^{CORESET} = N_{RB}^{CORESET} N_{symb}^{CORESET}$ is the number of REGs in the CORESET

- CCE $j$ consists of REG bundles $\{f(6j/L),f(6j/L+1),...,f(6j/L+6/L\text{-}1)\}$ where $f(\cdot)$ is an interleaver

For non-interleaved CCE-to-REG mapping, $L = 6$ and $f(x) = x$.

For interleaved CCE-to-REG mapping, $L \in \{2,6\}$ for $N_{symb}^{CORESET} = 1$ and $L \in \{N_{symb}^{CORESET}, 6\}$ for

$N_{symb}^{CORESET} \in \{2,3\}$ . The interleaver is defined by

$$f(x) = (rC + c + n_{shift}) \bmod \left(N_{REG}^{CORESET}/L\right)$$
$$x = cR + r$$
$$r = 0,1,..., R - 1$$
$$c = 0,1, ... , C - 1$$
$$C = N_{REG}^{CORESET}/(LR)$$

where $R \in \{2,3,6\}$.

According to an embodiment, the gNB may provide the UE with configuration information regarding the symbol to which the PDCCH is mapped in the slot, the transmission period, and the like through signaling.

According to an embodiment, a description of a search space for a PDCCH is as follows. The number of CCEs necessary to transmit a PDCCH may be 1, 2, 4, 8, or 16 according to aggregation levels (ALs), and different number of CCEs may be used to implement link adaption of a downlink control channel. For example, when AL=L, one downlink control channel may be transmitted through L CCEs. The UE performs blind decoding for detecting a signal while being no information regarding the downlink control channel, and to this end, a search space indicating a set of CCEs may be defined. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

According to an embodiment, the search spaces may be classified into common search spaces (CSSs) and UE-specific search spaces (USSs). A group of UEs or all UEs may search a common search space of the PDCCH in order to receive cell-common control information such as dynamic scheduling regarding system information or a paging message. For example, the UE may receive PDSCH scheduling allocation information for reception of system information by searching the common search space for the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space for the PDCCH. The UE-specific search space may be defined UE-specifically as a function of various system parameters and the identity (ID) of the UE.

According to an embodiment, configuration information of the search space for the PDCCH may be configured for the UE by the base station through upper layer signaling (e.g., SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a CORESET index for monitoring the search space, and the like.

For example, parameters of the search space for the PDCCH may include the following pieces of information given in Table 7 below.

Table 7

```
SearchSpace ::=                   SEQUENCE {
    searchSpaceId                 SearchSpaceId,
    controlResourceSetId          ControlResourceSetId
OPTIONAL,    -- Cond SetupOnly
    monitoringSlotPeriodicityAndOffset CHOICE {
        sl1                       NULL,
        sl2                       INTEGER (0..1),
        sl4                       INTEGER (0..3),
        sl5                       INTEGER (0..4),
        sl8                       INTEGER (0..7),
        sl10                      INTEGER (0..9),
        sl16                      INTEGER (0..15),
        sl20                      INTEGER (0..19),
        sl40                      INTEGER (0..39),
        sl80                      INTEGER (0..79),
        sl160                     INTEGER (0..159),
        sl320                     INTEGER (0..319),
        sl640                     INTEGER (0..639),
        sl1280                    INTEGER (0..1279),
        sl2560                    INTEGER (0..2559)
    }
OPTIONAL,    -- Cond Setup
    duration                      INTEGER (2..2559)
OPTIONAL,    -- Need R
    monitoringSymbolsWithinSlot       BIT STRING (SIZE (14))
OPTIONAL,    -- Cond Setup
    nrofCandidates                SEQUENCE {
        aggregationLevel1             ENUMERATED {n0, n1, n2,
n3, n4, n5, n6, n8},
        aggregationLevel2             ENUMERATED {n0, n1, n2,
n3, n4, n5, n6, n8},
        aggregationLevel4             ENUMERATED {n0, n1, n2,
n3, n4, n5, n6, n8},
        aggregationLevel8             ENUMERATED {n0, n1, n2,
n3, n4, n5, n6, n8},
        aggregationLevel16            ENUMERATED {n0, n1, n2,
n3, n4, n5, n6, n8}
    }
OPTIONAL,    -- Cond Setup
```

```
searchSpaceType                         CHOICE {
        common                              SEQUENCE {
            dci-Format0-0-AndFormat1-0          SEQUENCE {
                ...
            }
OPTIONAL,    -- Need R
            dci-Format2-0                       SEQUENCE {
                nrofCandidates-SFI                  SEQUENCE {
                    aggregationLevel1                   ENUMERATED {n1,
n2}     OPTIONAL,    -- Need R
                    aggregationLevel2                   ENUMERATED {n1,
n2}     OPTIONAL,    -- Need R
                    aggregationLevel4                   ENUMERATED {n1,
n2}     OPTIONAL,    -- Need R
                    aggregationLevel8                   ENUMERATED {n1,
n2}     OPTIONAL,    -- Need R
                    aggregationLevel16                  ENUMERATED {n1,
n2}     OPTIONAL     -- Need R
                },
                ...
            }
OPTIONAL,    -- Need R
            dci-Format2-1                       SEQUENCE {
                ...
            }
OPTIONAL,    -- Need R
            dci-Format2-2                       SEQUENCE {
                ...
            }
OPTIONAL,    -- Need R
            dci-Format2-3                       SEQUENCE {
                dummy1                              ENUMERATED {sl1, sl2,
sl4, sl5, sl8, sl10, sl16, sl20}  OPTIONAL,   -- Cond Setup
                dummy2                              ENUMERATED {n1, n2},
                ...
            }
OPTIONAL     -- Need R
        },
        ue-Specific                         SEQUENCE {
            dci-Formats                         ENUMERATED {formats0-
0-And-1-0, formats0-1-And-1-1},
            ...,
        }
    }
OPTIONAL     -- Cond Setup2
}
```

According to an embodiment, based on configuration information, the base station may configure one or multiple search space sets for the UE. According to an embodiment, the base station may configure search space set 1 and search space set 2 for the UE. In search space set 1, the UE may be configured to monitor DCI format A scrambled by an X-RNTI in a common search space, and in search space set 3, the UE may be configured to monitor DCI format B scrambled by a Y-RNTI in a UE-specific search space.

According to an embodiment, one or multiple search space sets may exist in a common search space or a UE-specific search space according to configuration information. For example, search space set #1 and search space set #2 may be configured as a common search space, and search space set #3 and search space set #4 may be configured as a UE-specific search space.

According to an embodiment, combinations of DCI formats and RNTIs given below may be monitored in a common search space. According to various embodiments of the disclosure, those combinations described above are not limited to examples below.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI

- DCI format 2_3 with CRC scrambled by TPC-SRS-RNTI

According to an embodiment, combinations of DCI formats and RNTIs given below may be monitored in a UE-specific search space. According to various embodiments of the disclosure, those combinations described above are not limited to examples below.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

According to an embodiment, the RNTIs enumerated above may follow the definition and usage given below. According to various embodiments of the disclosure, those definitions and usages described above are not limited to examples below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI(RA-RNTI): used to schedule a PDSCH in a random access step
- Paging RNTI (P-RNTI): used to schedule a PDSCH in which paging is transmitted
- System information RNTI (SI-RNTI): used to schedule a PDSCH in which system information is transmitted
- Interruption RNTI(INT-RNTI): used to indicate whether a PDSCH is punctured
- Transmit power control for PUSCH RNTI (TPC-PUSCH-RNTI): used to indicate a power control command regarding a PUSCH
- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

According to an embodiment, the above-described DCI formats may be defined as shown in Table 8 below.

Table 8

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

According to an embodiment, in 5G, the search space at aggregation level L in connection with control resource set p and search space set s may be expressed by Equation 1 below.

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i \qquad \ldots \text{Equation 1}$$

- $L$: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L

- $m_{s,n_{CI}} = 0, ..., M_{s,max}^{(L)} -1$ : PDCCH candidate index at aggregation level L

-

$$i = 0, ..., L -1$$

-

- $Y_{p,n_{s,f}^{\mu}} = \left( A_p \cdot Y_{p,n_{s,f}^{\mu}-1} \right) mod\, D$ , $Y_{p,-1} = n_{RNTI} \neq 0$ , $A_p = 39827\, for\, pmod3 =$ $0$, $A_p = 39829\, for\, pmod3 = 1$, $A_p = 39839\, for\, pmod3 = 2$, $D = 65537$

- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

As described above, signal transmission/reception in ultrawide bandwidths ranging from tens or hundreds of MHz or multiple GHz may be supported to accomplish an ultrahigh-speed data service at multiple Gbps in 5G systems. Ultra-wide bandwidth signal transmission and reception may be supported through a single component carrier (CC), or through carrier aggregation (CA) technology that combines multiple CCs. If the mobile communication operator fails to secure frequencies in a bandwidth enough to provide a super-fast data service by using a single CC, the CA technology combines respective CCs having a relatively small bandwidth size such that the total sum of frequency bandwidths is increased, consequently enabling a super-fast data service.

5G systems are designed and developed in consideration of all of various use cases. Besides the standby time, reliability, and availability, the UE's energy efficiency is critical in 5G systems. A 5G UE needs to be charged every week or every day depending on individual usage times. In general, for example, a UE consumes several ten mWs in the RRC_IDLE/RRC_INACTIVE state, and consumes several hundred mWs in the RRC_CONNECTED state. Designs for extending the battery life may be an indispensable element not only for better user experiences, but also for improved energy efficiency. Energy efficiency may be more important to UEs having no continuous energy supply (for example, UEs using small rechargeable and single coin cell batteries). Among 5G use cases, sensors and actuators are widely deployed for monitoring, measurement, charging, and the like on a wide scale. In general, batteries for sensors or actuators cannot be recharged, and are expected to last at least a number of years. In addition, wearable devices such as smartwatches, rings, eHealth-related devices, and medical monitoring devices can hardly last a maximum of 1-2 weeks, depending on the time of use.

According to an embodiment, a 5G UE's power consumption depends on the configured length (for example, the paging cycle) of wakeup periods, and an extended discontinuous reception (eDRX) cycle having a large value may be used to satisfy battery lifetime requirements. However, the eDRX scheme maintains a long battery lifetime on the basis of a long standby time, and thus is inappropriate for a service having a short standby time. For example, in the case of use for fire sensing and extinguishing, it is within 1-2 seconds from the time point at which a fire is detected by a sensor that fire shutters need to be closed, and sprinklers need to be activated by actuators. In this case, the standby time may be critical, and a long eDRX cycle as in existing cases cannot satisfy latency requirements, and may thus be inappropriate for such a case.

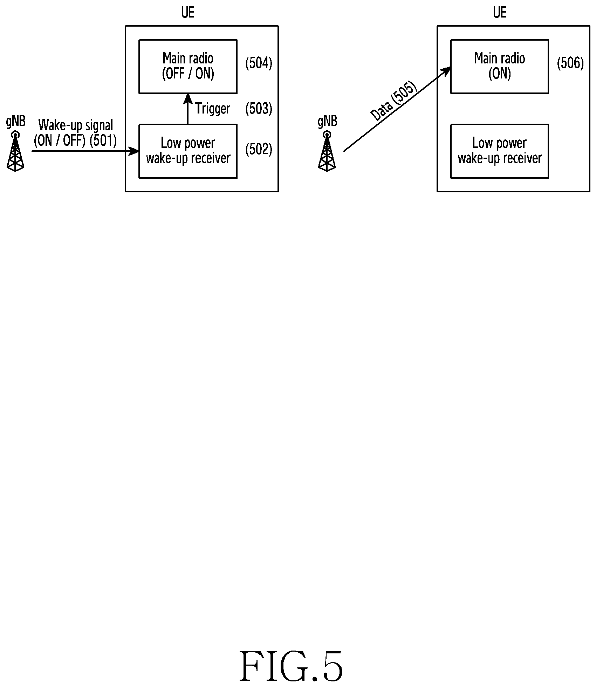

FIG. 5 illustrates an example of state transitions of a base station and a UE, and the state of the UE according to the base station state according to an embodiment of the disclosure. Specifically, FIG. 5 illustrates state transitions of a base station (gNB) and a UE for solving the above-described problems.

According to an embodiment, a 5G UE may need to periodically wake up once per eDRX cycle, and this may dominate power consumption during a period of time having no signaling or data traffic. If the UE may wake up only when triggered, such as by paging, power consumption may be drastically reduced. Substantial reduction in power consumption may be accomplished by a method, as in FIG. 5, in which the main radio (MR) (e.g., conventional NR radio) is triggered using a wake-up signal (WUS), and the main radio is turned on only when data transmission/reception is necessary by using a wake-up receiver (WUR) which is a separate receiver capable of monitoring the WUS with ultralow power.

According to an embodiment of the disclosure, in operation 501, the gNB may transmit a WUS corresponding to ON or OFF to the UE.

In operation 502, the UE may receive a WUS by using the WUR.

In operation 503, the UE may trigger the main radio, which is in an OFF or ON state, based on information indicating that the received signal corresponds to ON or OFF.

In operation 504, the UE may wake up the main radio or may configure a power off state. According to an embodiment, instead of a fully OFF state, a deep sleep (DS) or ultra-deep sleep (UDS) state may also be configured.

If data traffic to be transmitted from the gNB to the UE has occurred in operation 505, and if the WUS transmitted by the gNB in operation 501 is a signal corresponding to ON, the main radio may be turned ON in operation 506, and the UE may receive data transmitted by the gNB through the main radio, rather than the WUR.

According to an embodiment, power consumed to monitor the WUS depends on the WUS design and hardware modules of the WUR used to detect and process signals, and it is thus expected that the gain will be maximized with regard to devices which are sensitive to power and have small form factors, including wearable devices, and IoT use cases (such as industrial sensors and controllers).

According to an embodiment, a UE including a wake-up receiver may report to the gNB that the UE is capable of waking up the main radio by using the wake-up receiver, or may report capability information to the gNB to indicate that the UE includes a wake-up receiver.

According to an embodiment, the UE may report capability information regarding the wake-up receiver to the gNB through the UE capability report procedure in FIG. 4.

According to an embodiment, the UE may report capability information regarding the wake-up receiver or capability information indicating capability to receive PEI to the gNB through at least one of the random access preamble or the uplink data channel in the random access procedure in FIG. 3. According to an embodiment, sets of random access preambles which may be transmitted by the UE including a wake-up receiver or having capability information indicating capability to receive PEI may be transmitted as system information to the UE. The UE may select a random access preamble from the sets received by the UE, and may transmit the random access preamble in operation 310 of the random access procedure in FIG. 3, based on the selected random access preamble. According to an embodiment, after reporting capability information regarding the wake-up receiver or capability information indicating capability to receive PEI to the gNB, the UE may receive information indicating whether or not to use the wake-up receiver or use the PEI from the gNB through upper layer signaling or physical signal.

According to an embodiment, in case that the gNB supports the UE including a wake-up receiver (e.g., in case that the gNB has hardware capable of transmitting a wake-up signal), the gNB may determine whether or not to use the wake-up receiver after receiving capability information regarding the wake-up receiver from the UE. According to an embodiment, the gNB may transmit a signal indicating configuration information regarding whether or not to use the wake-up receiver, or for receiving a wake-up signal, to the UE. According to an embodiment, the gNB may transmit, to the UE, at least one of indication information indicating reception of a wake-up signal by the UE or activation of the wake-up receiver, or indication information indicating transmission of a wake-up signal by the gNB. After slots configured by the gNB (or defined by the specifications) from a slot in which the signal is received, the UE may turn off the main radio and may turn on the wake-up receiver for monitoring the wake-up signal. According to an embodiment, the UE may transmit at least one of feedback indicating reception of a signal indicating whether or not to use the wake-up receiver before turning off the main radio, or feedback indicating that the main radio is turned off, and the wake-up receiver is turned on, to the gNB.

According to an embodiment, in case that the gNB does not support a UE having a wake-up receiver, the gNB may receive capability information regarding the wake-up receiver from the UE and then transmit a signal to the UE to indicate that the wake-up receiver cannot be used. The UE may transmit feedback to the gNB to indicate reception of the signal indicating that the wake-up receiver cannot be used. According to an embodiment, by using an existing power saving method (for example, C-DRX or I-DRX such as paging), the UE may perform operations by means of parameters of the existing power saving method configured by the gNB.

According to an embodiment, the UE may determine whether to activate or deactivate the WUR, based on reception of the WUS transmitted from the gNB. According to an embodiment, the UE may also determine whether to activate or deactivate the WUR, based on reception of a synchronization signal of the WUR, transmitted from the gNB.

According to various embodiments of the disclosure, after reporting the capability of a UE having a wake-up receiver and after a procedure regarding whether the gNB supports (or grants) the wake-up receiver, the UE's wake-up receiver may receive a wake-up signal and may perform operations of turning on and off the UE's main radio. According to an embodiment, it is obvious that the UE may perform an operation of turning on/off the main radio and an operation of reporting the capability of the UE having a wake-up receiver, or operation procedures regarding whether the gNB supports the wake-up receiver regardless of each other. For example, even if the UE's capability reporting operation and allowing procedure have not been performed, the gNB may transmit a signal to the UE to indicate configuration information for receiving a wake-up signal, or regarding whether or not to use the wake-up receiver. Accordingly, among UEs that receive signals from the gNB, a UE having a wake-up receiver may turn on/off the main radio through the wake-up receiver.

According to an embodiment, after the UE's capability reporting operation and the gNB's granting procedure or determination on whether to use the UE's wake-up receiver are performed, the operation of turning on/off the main radio through the wake-up receiver may be applied to all UEs (e.g., RRC_CONNECTED UEs, RRC_IDLE/RRC_INACTIVE UEs, or UEs accessing the cell (e.g., RRC_CONNECTED UEs)) in the cell supported by the gNB. In case that the UE's capability reporting operation and the gNB's granting procedure are not performed, the operation of turning on/off the main radio through the wake-up receiver may be applied to an RRC_IDLE/RRC_INACTIVE UE which camps on the cell supported by the gNB. In addition, various embodiments of the disclosure may include at least one from among all of various operations of a UE including a wake-up receiver and a gNB disclosed hereinafter, parts thereof, or a combination of parts thereof.

Hereinafter, operations in which a UE having a wake-up receiver turns on and off the UE's main radio according to various embodiments of the disclosure will be described. Various embodiments of the disclosure may include at least one from among all of various operations of a UE including a wake-up receiver and a gNB disclosed hereinafter, parts thereof, or a combination of parts thereof.

According to an embodiment, when a main radio of a UE is on, the UE may receive a downlink signal (or data) from a base station via the main radio. According to various embodiments of the disclosure, the main radio being "on" may be expressed as the main radio being "turned on," "activated," or the like, but is not limited thereto, and may also be represented by expressions having similar or substantially equivalent meanings. According to an embodiment, the description that the main radio is activated may mean that specific components (e.g., radio frequency (RF) and baseband (BB)) of the main radio are turned on or activated, or may be defined by the specifications (e.g., 3GPP TS documents). However, according to various embodiments of the disclosure, without being limited to the above descriptions, the description that the main radio is activated may include parameters equivalent or substantially similar thereto, or operations performed by such parameters. Alternatively, the description that the main radio is activated may include the meaning that the main radio performs a reception operation of a specific channel or signal (e.g., an SS/PBCH block including a synchronization signal or a PDCCH including a downlink control channel) defined in the 3GPP TS documents.

According to an embodiment, when the main radio of the UE is turned off, the UE may be considered to be in a sleep period or may not receive a downlink signal (or data) from the base station. According to various embodiments of the disclosure, the main radio being "OFF" may be expressed as the main radio being "turned off" or the main radio being "deactivated," and may have a similar or substantially equivalent meaning thereto, without being limited thereto. According to an embodiment, the description that the main radio is deactivated may mean that specific components (e.g., radio frequency (RF) and baseband (BB)) of the main radio are turned off or deactivated, or may be defined by the specifications (e.g., 3GPP TS documents). However, according to various embodiments of the disclosure, without being limited to the above descriptions, the description that the main radio is deactivated may include parameters equivalent or substantially similar thereto, or operations performed by such parameters. Alternatively, the description that the main radio is deactivated may include the meaning that the main radio no longer performs a reception operation of a specific channel or signal (e.g., an SS/PBCH block including a synchronization signal or a PDCCH including a downlink control channel) defined in the 3GPP TS documents.

As described above, to save power consumption, a main radio may be triggered to be turned on through a wake-up receiver only when the UE receives a wake-up signal from the base station, so that the main radio can receive a downlink signal from the base station, or when the wake-up signal is not received, the main radio may be turned off. In this case, when the UE in the RRC IDLE or RRC INACTIVE state receives the wake-up signal, the UE may omit the above-described PEI reception and attempt paging reception immediately. Alternatively, when receiving the wake-up signal, according to the UE implementation, the UE in the RRC IDLE or RRC INACTIVE state may perform the PEI reception and then attempt paging reception, or may omit the PEI reception and attempt paging reception.

According to various embodiments of the disclosure, even though the base station does not transmit the wake-up signal to the UE, the UE may determine that the wake-up signal has been received, due to the influence of noise such as additive white Gaussian noise (AWGN), or intra-cell or inter-cell interference. In this case, the UE triggers the main radio to be in an on state by the wake-up signal and performs PDCCH decoding for paging reception, which may possibly causing unnecessary power consumption. In order to reduce the rate (e.g., false alarm) of the incorrect determination of wake-up signal reception as described above, PEI reception may still be required.

Therefore, hereinafter, various methods for determining whether to receive a PEI (e.g., determining whether to enable (activate) or disable (deactivate) monitoring of a PEI) after a UE receives a wake-up signal by a wake-up receiver, and methods for determining the same will be described.

For example, when the PEI is not monitored by the above method, the UE may receive a wake-up signal and then receive a control and data channel related to paging in a paging occasion. When the PEI is monitored by the above-described method, the UE may receive a wake-up signal and, additionally, receive a PEI, and if the PEI indicates the paging reception of the UE (e.g., when a subgroup to which the UE belongs and a paging occasion are indicated), the UE may receive a control and data channel related to paging in a paging occasion. In addition, when the PEI does not indicate paging reception of the UE (e.g., when a sub-group to which the UE belongs and a paging occasion are not indicated), the UE may skip the paging reception.

In this case, for a case in which when a UE performs PEI monitoring, all UEs in the subgroup to which the UEs belong, indicated by the PEI, trigger the main radio to be turned on and paging reception is not required, a method for reducing unnecessary power consumption is additionally described.

Hereinafter, in description various embodiments of the disclosure, operations or procedures described as being performed by a main radio or a wake-up receiver for a UE including a wake-up receiver (e.g., a UE having wake-up reception capability), can be understood as being performed by the UE including the wake-up receiver (e.g., the UE having wake-up reception capability)

## PEI monitoring enabling (activation)/disabling (deactivation)

According to various embodiments of the disclosure, a detailed method for enabling or disabling PEI monitoring is described.

According to an embodiment, when a UE having a wake-up receiver has capability of receiving a PEI, the UE may enable or disable PEI monitoring.

As an embodiment, when a UE having a wake-up receiver has no capability of receiving a PEI, the UE may disable PEI monitoring. Alternatively, when the UE having the wake-up receiver has capability of receiving the PEI, the UE may receive an explicit indication on whether to enable or disable PEI monitoring from the base station, and determine whether to enable or disable PEI monitoring based on the explicit indication, or may make determination by implicitly associating with specific information. Alternatively, the UE may determine, based on UE implementation or UE's its own determination, whether to enable or disable PEI monitoring. When the UE disables PEI monitoring by the above determination scheme, the UE may not perform PEI monitoring, thereby reducing power consumption, or when the UE enables PEI monitoring, the UE requires additional power consumption due to PEI monitoring, but can reduce false alarms in wake-up signal reception.

## Embodiment 1

According to an embodiment, whether to disable or enable PEI monitoring by the UE may be determined in association with the number of subgroups configured for the UE, in relation to a subgroup to which the UE indicated by the PEI belongs.

For example, when the number of subgroups is greater than X, PEI monitoring may be enabled, and when the wake-up receiver monitors the wake-up signal and the wake-up signal is received, the main radio may be triggered to be turned on and PEI monitoring may be performed.

For example, when the number of subgroups is smaller than X, when PEI monitoring may be disabled, and when the wake-up receiver monitors the wake-up signal and the wake-up signal is received, the main radio may be triggered to be turned on PEI monitoring may be skipped.

In this case, the above-described number of subgroups and X may be transmitted to the UE by a higher-layer signal (e.g., system information or radio resource control (RRC)).

When the base station does not support the above-described subgrouping, the UE may determine the number of subgroups as a specific number (e.g., 0), or determine that no subgroup exists. Accordingly, when X is configured to have a value greater than 0, the UE may disable PEI monitoring. Alternatively, the UE may determine X as infinity and disable PEI monitoring. When the wake-up receiver monitors a wake-up signal and the wake-up signal is received, the main radio may be triggered to be turned on and PEI monitoring may be skipped.

## Embodiment 2

According to an embodiment, whether to disable or able PEI monitoring by the UE may be determined in association of subsequent operations of the UE indicating the wake-up signal when the UE receives the wake-up signal.

For example, when the wake-up signal indicates a UE-dedicated operation (e.g., an RRC connection request or random access of the UE), PEI monitoring may be enabled, and when the wake-up receiver monitors the wake-up signal and the wake-up signal is received, the main radio may be triggered to be turned on and PEI monitoring may be performed. According to the above-described methods, when a false alarm of the wake-up signal occurs, the UE may perform a UE-dedicated operation, thereby resolving the power consumption problem. For example, the UE may perform PEI monitoring and control the PEI to be received, thereby reducing false alarms by the wake-up signal.

According to an embodiment, next, when the wake-up signal indicates the operation (e.g., system information update or change) of one or more UEs (e.g., a group UE or all UEs in a cell), PEI monitoring may be disabled, and when the wake-up receiver monitors the wake-up signal and the wake-up signal is received, the main radio may be triggered to be turned on and PEI monitoring may be skipped.

According to an embodiment, the possible subsequent operations of the UE, which can be indicated by the wake-up signal, may be determined by a standard, and may be configured by a higher-layer signal (e.g., system information or RRC), and one of the operations may be transmitted to the UE by the wake-up signal.

## Embodiment 3

According to an embodiment, whether the UE disables or enables PEI monitoring may be determined in association with a specification release (or version) of the UE which can be indicated by the wake-up signal when the UE receives the wake-up signal.

For example, when the wake-up signal indicates that there is another release of UE exists in addition to Rel-19 in the cell, PEI monitoring may be enabled, and when the wake-up receiver monitors the wake-up signal and the wake-up signal is received, the main radio may be triggered to be turned on and PEI monitoring may be performed.

For example, when the wake-up signal indicates that there is only the Rel-19 UE in the cell, the PEI monitoring may be disabled, and when the wake-up receiver monitors the wake-up signal and the wake-up signal is received, the main radio may be triggered to the turned on and the PEI monitoring may be skipped.

## Embodiment 4

According to an embodiment, whether the UE disables or enables PEI monitoring may be determined based on a bit field which can be indicated by the wake-up signal when the UE receives the wake-up signal.

For example, when the wake-up signal includes a bit field indicating enabling of the PEI monitoring, the PEI monitoring may be enabled, and when the wake-up receiver monitors the wake-up signal and the wake-up signal is received, the main radio may be trigged to be turned on the PEI monitoring may be performed.

For example, when the wake-up signal includes a bit field indicating disabling of PEI monitoring, the PEI monitoring may be disabled, and when the wake-up receiver monitors the wake-up signal and the wake-up signal is received, the main radio may be triggered to be turned on and the PEI monitoring may be skipped.

## Embodiment 5

For example, whether the UE disables or enables PEI monitoring may be determined by receiving, by the UE, a bit field which can be indicated by a higher-layer signal including configuration related to wake-up reception or a separate higher-layer signal.

For example, when the higher-layer signal includes a bit field indicating enabling of PEI monitoring, the PEI monitoring may be enabled, and when the wake-up receiver monitors the wake-up signal and the wake-up signal is received, the main radio may be triggered to be turned on and the PEI monitoring may be performed.

For example, when the higher-layer signal includes a bit field indicating disabling of PEI monitoring, the PEI monitoring may be disabled, and when the wake-up receiver monitors the wake-up signal and the wake-signal is received, the main radio may be triggered to be turned on and the PEI monitoring may be skipped.

## Embodiment 6

According to various embodiments of the disclosure, whether the UE disables or enables PEI monitor may be determined by the UE's autonomous determination by the UE implementation.

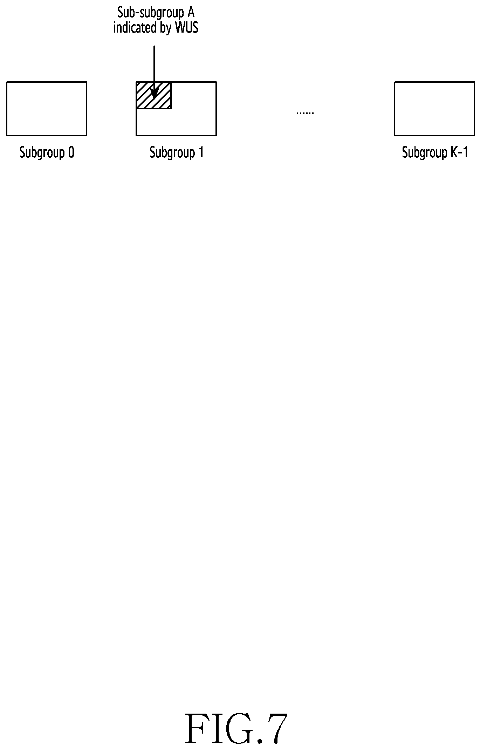

According to an embodiment, for example, in order for the UE to identify, after receiving a wake-up signal, whether the wake-up signal has been well received receives the wake-up signal and information indicating the received wake-up signal is valid, the UE may PEI monitoring, or may identify whether a paging occasion and subgroup indication field in the PEI indicates that the UE needs to receive the paging occasion or paging information. Alternatively, after receiving a wake-up signal, the UE may perform PEI monitoring, receive a TRS availability indication field in the PEI, and perform time/frequency synchronization, AGC, channel estimation, etc., based on a received TRS resource set instead of using an SSB. In this case, the subgroup indicated by the wake-up signal and the sub-group indicated by the PEI may be identical, and the configuration related thereto may be provided by the embodiment in FIG 7.

According to an embodiment, when the UE determines that the information received through the wake-up signal and the information received through the PEI are identical, the UE may determine that the received information is correct, and may perform paging reception on the paging occasion. The information received through the wake-up signal or the PEI by the UE may include at least one of information indicating the subgroup or the information indicating the paging occasion.

According to an embodiment, when the UE determines that the information received through the wake-up signal is different from the information received through the PEI, the UE may perform at least one the following procedures.

First, the UE may perform a subsequent operation according to the information received through the PEI. For example, even though the main radio of the UE is turned on by the wake-up signal so that the UE receives a paging signal, the UE may perform paging reception only if the PEI indicates reception of paging in the subgroup of the paging occasion to which the UE belongs, and otherwise, the main radio of the UE may be turned off.

Second, the UE may receive a paging signal only if the information received through the wake-up signal matches the information received through the PEI, and otherwise, the main radio of the UE may be turned off.

Third, the UE may determine that the information received through the wake-up signal is not reliable. When such a situation occurs at least X times or more, the UE may suspend the reception of the wake-up signal by disabling the wake-up receiver, and may turn on the main radio. Here, X may be indicated by the base station through a higher-layer signal or system information.

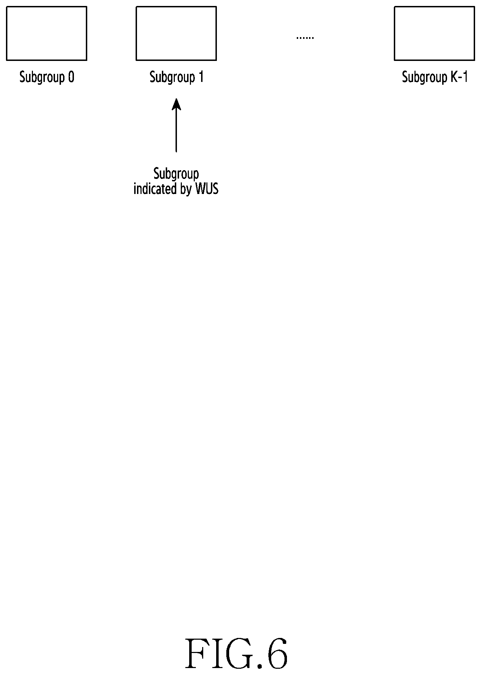

Hereinafter, according to various embodiments of the disclosure, when PEI monitoring is disabled or enabled, embodiments related to subgrouping are described through FIGS. 6 and 7 in detail.

FIG. 6 illustrates an example of a scheme of distinguishing groups of a UE having a wake-up receiver according to various embodiments of the disclosure. More specifically, FIG. 6 illustrates an example in which the UE receives information on a subgroup indicated by a PEI through a wake-up signal when PEI monitoring is disabled.

According to an embodiment, although not shown in FIG. 6, an additional scheme in which the UE receives information on a paging occasion through a wake-up signal may be possible.

According to an embodiment, information on a paging occasion and a subgroup included in the wake-up signal may be determined based on paging occasion and subgroup configuration information including the number of subgroups configured by the higher-layer signal for the PEI. Alternatively, the UE may receive the subgroup and paging occasion configuration information including the number of subgroups by the higher-layer signal for the wake-up signal reception configuration or a separate higher-layer signal, and may determine information on the subgroup based on the configuration information.

FIG. 7 illustrates another example of distinguishing groups of a UE having a wake-up receiver according to various embodiments of the disclosure. More specifically, FIG. 7 illustrates an example in which when PEI monitoring is enabled, the UE receives information on a subgroup indicated by a PEI through a wake-up signal and information on a separate subgroup (e.g., sub-subgroup).

Although not shown in FIG. 7, an additional scheme of receiving information on a paging occasion through a wake-up signal may be possible.

According to an embodiment, information on a subgroup, received through a wake-up signal by the UE, may be used for the purpose of further reducing the number of UEs in the subgroup indicated by the PEI. For example, a specific subgroup indicated by the PEI may be further divided into subgroups indicated by the wake-up signal, and only some UEs in a specific subgroup determined based on information on the subgroup related to the wake-up signal and the PEI may perform PEI monitoring by triggering the main radio to be turned on. Accordingly, power consumption for receiving paging can be reduced.

According to an embodiment, the information on the subgroup received through the wake-up signal by the UE may be determined based on subgroup and paging occasion configuration information including the number of subgroups configured by the higher-layer signal for the PEI. Alternatively, the UE may receive the subgroup and paging occasion configuration information including the number of subgroups, based on a separate higher-layer signal or the higher-layer signal for wake-up signal reception configuration, and determine information on the subgroup.

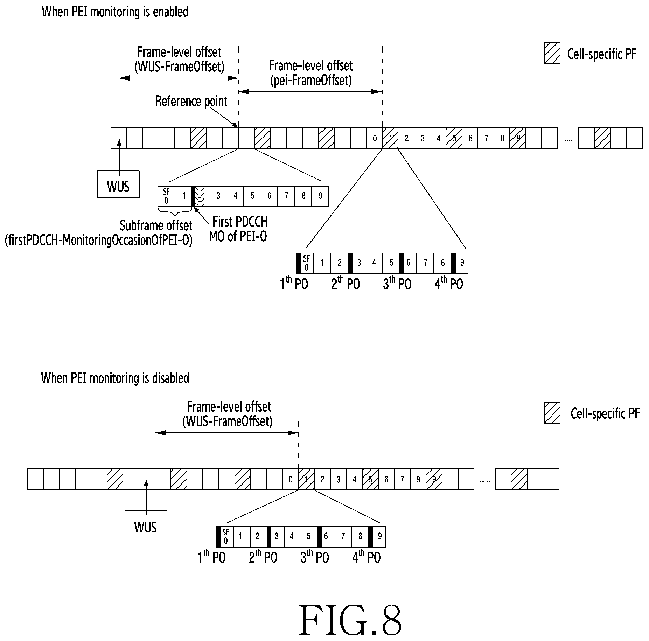

FIG. 8 illustrates an example of a scheme for receiving a paging early indication (PEI) by a UE having a wake-up receiver according to various embodiments of the disclosure. More specifically, FIG. 8 illustrates an example of receiving a wake-up signal, a PEI, and paging by a UE having a wake-up receiver according to various embodiments of the disclosure.

According to various embodiments of the disclosure, a scheme for determining a PF of a UE having a wake-up receiver within N (e.g., the number of cell-common PFs per DRX cycle) and transmitting and receiving paging in the PF is described in detail. Through this scheme, the UE may determine, after receiving a wake-up signal, whether to perform PEI monitoring according to whether PEI monitoring is enabled or disabled, determine whether to receive paging through the wake-up signal and PEI reception, and receive paging. Paging frames of all UEs in a cell including the UE having the wake-up receiver can be supported within the number of cell-common PFs, and thus addition of resources due to an additional paging frame of the UE having the wake-up receiver may not be required, and the complexity of scheduling of the base station due to paging support for the UE having the wake-up receiver is not increased.

According to various embodiments of the disclosure, when PEI monitoring is enabled, a scheme of receiving a wake-up signal, a PEI, and paging is described in detail.

According to an embodiment, a method for determining a PF is first described.

Referring to the upper part of FIG. 8, an SFN for reception of a wake-up signal and an SFN (e.g., radio frame) for reception of a PEI are illustrated. WUS-FrameOffset may be added with reference to a radio frame in which the wake-up signal is received, and additionally, pei-FrameOffset may be added so that a paging frame (PF) can be determined.

The WUS-FrameOffset may be determined in consideration of a time required until the wake-up receiver of the UE receives the wake-up signal, and wakes up the main radio by the wake-up signal, and the main radio receives the PEI, etc.

The WUS-FrameOffset may be received by the UE by a higher-layer signal such as system information. Alternatively, the WUS-FrameOffset may be included in the wake-up signal and received by the UE.

The pei-FrameOffset may be determined in consideration of a time required until the UE receive the PEI and receives paging from the PEI, etc., and the pei-FrameOffset may be received by a higher-layer signal such as system information. Alternatively, the pei-FrameOffset may be included in the wake-up signal and received by the UE.

When the PF determined by the above-described methods is not included in a cell-common PF, a paging frame may be determined based on the next cell-common PF.

For example, the embodiment of FIG. 8 illustrates a case where when {PF_offset=3, T=128, N=T/4=32, Ns=4, and UE_ID mod 32=1 and floor(UE_ID/32) mod 4=1} is assumed, every 4th radio frame (e.g., SFN -3, 1, 5, 9, ...) is a cell common PF by N=T/4 and PF_offset=3. According to an embodiment, in NR, a radio frame may be 0 to 1023, a number from 0 to 1023 is repeated after radio frame 1023, and thus radio frame -3 described above may refer to radio frame 1021 (= -3 mod 1024).

According to an embodiment, if a paging frame (PF) determined after WUS-FrameOffset is added with reference to a radio frame in which a wake-up signal is received and pei-FrameOffset is further added is 2, the next cell-common PF 5 may be determined as the PF in which the UE needs to receive a paging message. This method may allow faster paging to be received compared to the next PF of 129 since the PF according to the above-described existing method is determined as a radio frame in which SFN is 1, 129, 257, ... by {(SFN + 3) mod 128 = (128 div 32)*(UE_ID mod 32) = 4*1 = 4}.

According to an embodiment of the disclosure, the UE may not expect that the PF in which the paging needs to be received, as determined by the above method, is not included in a cell-common PF. For example, the UE may expect that the PF determined by the above method is always included in the cell-common PF. Therefore, the base station may perform scheduling so that the PF determined by the method described above is always included in the cell-common PF.

Next, according to various embodiments of the disclosure, a scheme of receiving a wake-up signal and paging when PEI monitoring is disabled is described.

According an embodiment, a method for determining a PF is first described.

Referring to the lower part of FIG. 8, an SFN (e.g., radio frame) for reception of a wake-up signal is illustrated. WUS-FrameOffset may be added with reference to a radio frame in which the wake-up signal is received, so that a paging frame (PF) can be determined.

The WUS-FrameOffset may be determined in consideration of a time required until the wake-up receiver of the UE receives a wake-up signal, and wakes up the main radio from the wake-up signal, and the main radio receives a paging signal, etc.

The WUS-FrameOffset may be received by a higher-layer signal such as system information. Alternatively, the WUS-FrameOffset may be included in the wake-up signal and received by the UE.

When the PF determined by the above-described methods is not included in a cell-common PF, a paging frame may be determined based on the next cell-common PF.

For example, the embodiment of FIG. 8 illustrates a case where when {PF_offset=3, T=128, N=T/4=32, Ns=4, and UE_ID mod 32=1 and floor(UE_ID/32) mod 4=1}is assumed, every 4th radio frame (e.g., SFN ..., -3, 1, 5, 9, ...) is a cell common PF by N=T/4 and PF_offset=3. According to an embodiment, in NR, a radio frame may be 0 to 1023, a number from 0 to 1023 is repeated after radio frame 1023, and thus radio frame -3 described above may refer to radio frame 1021 (= -3 mod 1024).

According to an embodiment, if a paging frame (PF) determined after WUS-FrameOffset is added with reference to a radio frame in which a wake-up signal is received is 2, the next cell-common PF 5 may be determined as the PF in which the UE needs to receive a paging message. This method may allow faster paging to be received compared to the next PF of 129 since the PF according to the above-described existing method is determined as a radio frame in which SFN is 1, 129, 257, ... by {(SFN + 3) mod 128 = (128 div 32)*(UE_ID mod 32) = 4*1 = 4}.

According to an embodiment of the disclosure, the UE may not expect that the PF in which the paging needs to be received, as determined by the above method, is not included in a cell-common PF. For example, the UE may expect that the PF determined by the above method is always included in the cell-common PF. Therefore, the base station may perform scheduling so that the PF determined by the method described above is always included in the cell-common PF

Hereinafter, a method of determining a PO in a PF is described in detail. According to an embodiment, the method of determining a PO in a PF may be applied regardless of a case where PEI monitoring is enabled or a case where PEI monitoring is disabled.

According to an embodiment, first, the same scheme as for the existing UE (e.g., legacy UE) not including a wake-up receiver may be applied to the determining of a PO. For example, the PO may be determined by i_s = floor (UE_ID/N) mod Ns, which is an index of the PO. Here, Ns may indicate the number of POs in one PF, and may be determined by a higher-layer signal such as system information.

According to an embodiment, second, the determination of the PO may be performed by applying different parameters from those used for existing UEs not including a wake-up receiver. For example, instead of Ns applied to the existing UE, Ns_WUS applied to the UE having the wake-up receiver may be introduced. For example, the PO may be determined by i_s = floor (UE_ID/N) mod Ns_WUS, which is the index of the PO. Here, Ns_WUS may refer to the number of POs in one PF for UEs each having a wake-up receiver, and may be determined by a higher-layer signal such as system information.

According to an embodiment, third, the determination of the PO may be performed by applying the same method as that for a legacy UE not including a wake-up receiver, but by adding a new parameter. For example, the PO may be determined by i_s = floor (UE_ID/N) mod Ns + WUS-offset, which is the index of the PO. Here, Ns may refer to the number of POs in one PF and may be determined by a higher-layer signal such as system information. Here, WUS-offset may indicate an offset in the time domain (e.g., an offset in units of OFDM symbols or subframes). According to an embodiment, the above-described parameters may be transmitted to a UE having a wake-up receiver through a higher-layer signal such as system information.

In an embodiment of the disclosure, the starting position (e.g., OFDM symbol or subframe location) in the time domain and the amount of the PO resources corresponding to i_s described above may be transmitted to a UE having a wake-up receiver through a higher-layer signal including system information.

According to various embodiments of the disclosure, various operations or examples disclosed in FIGS. 5 to 8 may be performed in combination with various operations according to various embodiments of the disclosure, or may be performed separately, and may not be essential components individually.

Hereinafter, a procedure for waking up the main radio in case that the main radio is in a sleep state, according to various embodiments of the disclosure, will be described. According to an embodiment, an operation of waking up the main radio may be performed in combination with various operations according to various embodiments of the disclosure or may be performed separately, and may not be an essential component.

According to various embodiments of the disclosure, the gNB may transmit a wake-up signal to a UE if there is a channel or signal to be transmitted to the UE. The UE or wake-up receiver may receive the wake-up signal and turn on the main radio. According to an embodiment, the operation of receiving the wake-up signal itself may be an indication to wake up the main radio. According to an embodiment, the wake-up signal may include K information bits, and information indicating to wake up the main radio may be mapped to the K information bits. For example, in case that the wake-up signal includes one bit of information, "1" may indicate ON, and "0" may indicate OFF.

According to an embodiment, from the viewpoint of gNB transmission, it may be predefined at which time point a wake-up signal will be transmitted prior to transmission of a channel or signal. From the viewpoint of UE reception, it may be predefined at which time point the wake-up signal may be received prior to reception of a channel or signal.

According to an embodiment, the UE may transmit information regarding a time offset necessary between transmission of the wake-up signal and transmission of the channel/signal to the gNB, and the gNB may configure the time offset between transmission of the wake-up signal and transmission of the channel/signal for the UE, based on the received information. According to an embodiment, the UE may transmit information regarding a time offset necessary between transmission of the wake-up signal and transmission of the channel/signal to the gNB through a UE capability information reporting procedure, or may transmit the same to the gNB through a random access preamble in a random access procedure, or through an uplink data channel. Obviously, this is not limitative, and the UE may transmit information regarding a time offset to the gNB through an upper-level signal, or through various signals. The gNB may configure information regarding the time offset between transmission of the wake-up signal and transmission of the channel/signal for the UE through a random access response (e.g., message 2) in a random access procedure or through a downlink data channel of random access contention resolution (e.g., message 4). Obviously, this is not limitative, and the gNB may configure information regarding the time offset for the UE by an upper-level signal or through various signals.

According to various embodiments of the disclosure, in case that the gNB has a periodic channel or a periodic signal to be transmitted to the UE, the UE or wake-up receiver may turn on the main radio according to a period that follows configuration information of a periodic channel or a periodic signal configured by the gNB, instead of an operation in which the gNB transmits a wake-up signal each time there is a channel or signal to be transmitted.

According to an embodiment, the gNB may transmit a wake-up signal only during the first transmission of a periodic channel or a periodic signal, and may omit wake-up signal transmission when the channel or signal is later transmitted repeatedly. In this case, the UE or wake-up receiver may turn on the main radio, based on the period that follows the configuration information of a periodic channel or a periodic signal configured by the gNB.

According to an embodiment, the type of the periodic channel or periodic signal transmitted/received by the gNB and the UE may be predefined. According to an embodiment, the type of the periodic channel or periodic signal may be configured by the gNB. The gNB may configure the type of the periodic channel or periodic signal for the UE through a downlink data channel of a random access response (e.g., message 2) or random access contention resolution (e.g., message 4), or may configure the same for the UE through an upper-level signal indicating configuration information for wake-up signal reception or through another upper-level signal.

According to various embodiments of the disclosure, in case that the UE has a channel or signal (e.g., physical random access channel (PRACH) or scheduling request (SR) or buffer status report (BSR)) to be transmitted to the gNB, or in case that the UE performs L1/L3-based measurement, the UE or wake-up receiver may turn on the main radio regardless of the wake-up signal transmitted by the gNB.

According to an embodiment, with regard to uplink transmission from the UE to the gNB or L1/L3-based measurement, the operation in which the wake-up receiver receives a wake-up signal and turn on and off the UE's main radio may not be applied.

According to an embodiment, the type of the uplink channel or uplink signal transmitted by the UE regardless of the wake-up signal receiving operation, or the L1/L3-. According to an embodiment, the type of the uplink channel or uplink signal or L1/L3-based measurement may be configured by the base station. The base station may configure the type of the uplink channel or uplink signal or L1/L3-based measurement, for the UE via a downlink data channel of a random-access response (e.g., message 2) or a random-access contention resolution (e.g., message 4), or may configure the same for the UE via a higher signal indicating configuration information for wake-up signal reception or another higher signal.

Hereinafter, according to various embodiments of the disclosure, an operation for turning off the main radio, in case that the main radio is in an ON state, will be described. According to an embodiment, the operation of waking up the main radio in case that the main radio is in an ON state, may be performed in combination with various operations according to various embodiments of the disclosure or performed separately, and may not be a necessary component.

According to various embodiments of the disclosure, the gNB may transmit a sleep signal to a UE if there is no channel or signal to be transmitted to the UE. The UE or wake-up receiver may receive the sleep signal and turn off the main radio. According to an embodiment, the sleep signal receiving operation itself may be an instruction to make the main radio sleep. According to an embodiment, the sleep signal may be configured as a sequence separate from the wake-up signal. According to an embodiment, the sleep signal may include information mapped to information corresponding to an instruction to make the main radio sleep among K information bits included in the wake-up signal. For example, in the case of one bit of information, "0" may indicate OFF, and "1" may indicate ON.

According to various embodiments of the disclosure, the UE's main radio may be turned off if a configured condition is satisfied. According to an embodiment, the condition configured for the main radio may be a case where the main radio fails to detect or decode a downlink control channel or a specific channel or signal during a configured section. According to an embodiment, the gNB may configure configuration information (for example, information including a range and a specific channel or signal) used by the UE to determine to turn off the main radio for the UE through an upper-level signal indicating configuration information for wake-up signal reception or through another upper-level signal.

According to various embodiments of the disclosure, the UE's main radio may always be turned off after receiving one channel or signal. According to an embodiment, the main radio may be turned off after the wake-up receiver has received a wake-up signal from the gNB, thereby turning on the main radio such that channels or signals are received. According to an embodiment, the time necessary for the main radio to be turned off after completion of channel or reception may be predefined. According to an embodiment, the UE may transmit information regarding the time necessary for the main radio to be turned off to the gNB, and the gNB may configure the necessary time for the UE, based on the received information. According to an embodiment, the information regarding the necessary time transmitted by the UE may be transmitted to the gNB through a UE capability information reporting procedure. According to an embodiment, the information regarding the necessary time transmitted by the UE may transmitted to the gNB through a random access preamble or uplink data channel. Obviously, this is not limitative, and the UE may transmit the information regarding the necessary time to the gNB through an upper-level signal. The gNB may configure information regarding the time necessary for transmission for the UE through a random access response (e.g., message 2) or through a downlink data channel of random access contention resolution (e.g., message 4). Obviously, this is not limitative, and the gNB may configure the information regarding the necessary time for the UE through an upper-level signal.

Hereinafter, according to various embodiments of the disclosure, in case that the UE or the UE's main radio is in an RRC_CONNECTED state, connected mode DRX (C-DRX) may be configured for the UE such that the main radio wakes up at each DRX cycle and performs PDCCH reception. According to an embodiment, in case that the UE or the UE's main radio is in an RRC_CONNECTED state, the UE (or main radio) may be configured to receive a signal indicating whether or not the UE needs to receive a PDCCH at the next DRX cycle.

According to an embodiment, in case that the main radio is in an RRC_IDLE/RRC_INACTIVE state, idle mode DRX (I-DRX) may be configured for the UE such that the main radio wakes up at each paging cycle and receives a paging PDCCH. According to an embodiment, in case that the main radio is in an RRC_CONNECTED state, the UE (or main radio) may be configured to receive a signal indicating whether or not the UE needs to receive a paging PDCCH at the next paging cycle.

Hereinafter, according to various embodiments of the disclosure, in case that an operation of indicating ON/OFF based on reception of a wake-up signal by a wake-up receiver and a main radio and an operation that follows a C-DRX or I-DRX configuration coexist, an embodiment regarding a procedure of a UE that operates by the wake-up receiver will be provided. According to an embodiment, the operation of the UE or the UE's main radio related to RRC CONNECTED/IDLE/INACTIVE states may be performed in combination with various operations according to various embodiments of the disclosure or performed separately, and may not be a necessary component.

According to various embodiments of the disclosure, in case that a UE having a wake-up receiver performs operations of receiving a wake-up signal and turning on and off the UE's main radio, the UE may not perform a configuration of C-DRX or I-DRX and an operation that follows the configuration. In this case, instead of performing a configuration of C-DRX or I-DRX and an operation that follows the configuration, the UE may wake up the UE's main radio only upon receiving a wake-up signal that instructs the same to wake up the main radio, and may receive a physical downlink control channel (PDCCH) and a physical downlink shared channel (PDSCH) defined or configured to be received in C-DRX or I-DRX, respectively.

According to an embodiment, in case that the UE or the UE's main radio is in an RRC_CONNECTED state, and in case that the wake-up receiver performs an operation configured or activated by the gNB, the UE may turn on the main radio in case that the wake-up receiver has received a wake-up signal instructing the same to wake up the main radio, and may perform an operation regarding C-DRX configured by the gNB (for example, the main radio receives a PDCH within drx_onDurationTimer at each DRX cycle). According to an embodiment, the UE (or main radio) may not perform an operation configured to receive a signal (for example, DCI format 2_6) indicating whether or not the UE has to receive a PDCCH at the next DRX cycle. According to an embodiment, in case that the UE or the UE's main radio is in an RRC_IDLE/INACTIVE state, and in case that the wake-up receiver performs an operation configured or activated by the gNB, the UE may turn on the main radio in case that the wake-up receiver has received a wake-up signal instructing the same to wake up the main radio, and may perform an operation regarding I-DRX configured by the gNB (for example, the main radio wakes up at each paging cycle and receives a paging PDCCH). According to an embodiment, the UE (or main radio) may not perform an operation configured to receive a signal (for example, DCI format 2_7) indicating whether or not the UE has to receive a paging PDCCH at the next paging cycle.

According to an embodiment, instead of the operation according to the configuration regarding C-DRX or I-DRX, the UE may perform an operation for waking up the main radio according to the wake-up receiver and wake-up signal according to various embodiments of the disclosure and an operation for turning off the main radio. If the wake-up receiver performs an operation deactivated by the gNB, operations regarding the C-DRX or I-DRX configured by the gNB may be performed again.

According to various embodiments of the disclosure, in case that the UE's wake-up receiver performs an operation configured or activated by the gNB, and in case that the UE or wake-up receiver has received a wake-up signal such that the main radio is turned on, the UE may transition to an RRC_CONNECTED state or to an RRC_IDLE or RRC_INACTIVE state. According to an embodiment, it may be predetermined to which state the UE may transition, or may be determined by an upper-level signal regarding the wake-up receiver operation configuration from the gNB, or by a separate upper-level signal.

According to an embodiment, as an example of the case in which information regarding the UE's transition is predetermined, the main radio's state may follow the state immediately before the main radio is turned on and off at the last time immediately before the same is currently turned on. According to an embodiment, as another example of the case in which information regarding the UE's transition is predetermined, the main radio's state may be unaffected by the wake-up receiver operation configuration and activation/deactivation. For example, the main radio's state may be determined only by an upper-level signal indicating at least one of RRC_CONNECTED, RRC_IDLE, or RRC_INACTIVE, and the UE may determine that the main radio's state has not been changed by the wake-up receiver operation configuration and activation/deactivation.

According to an embodiment, the wake-up signal may include K information bits, and information regarding to which of the RRC_CONNECTED state, RRC_IDLE state, and RRC_INACTIVE state the main radio is supposed to transition may be mapped to the K information bits.

According to an embodiment, in case that the UE or the UE's main radio is in the RRC_CONNECTED state, based on the determined state of the UE, the main radio may wake up at each DRX cycle by means of C-DRX configured by the gNB, thereby receiving a PDCCH, or the UE (or main radio) may be configured by the gNB to receive a signal indicating whether or not the UE has to receive a PDCCH at the next DRX cycle. According to an embodiment, in case that an operation for turning off the main radio according to various embodiments is performed while the UE is receiving a PDCCH (for example, in a PDCCH receiving range), the UE may preferentially perform a procedure for turning off the main radio.

According to an embodiment, in case that the UE or the UE's main radio is in an RRC_IDLE/INACTIVE state, the main radio may wake up at each paging cycle by means of I-DRX configured by the gNB, thereby receiving a paging PDCCH. The UE (or main radio) may be configured by the gNB so as to receive a signal indicating whether or not the UE has to receive a paging PDCCH at the next paging cycle. In case that an operation for turning off the main radio according to various embodiments is performed while the UE is receiving a paging PDCCH (for example, in a paging PDCCH receiving range), the UE may preferentially perform a procedure for turning off the main radio.

According to various embodiments of the disclosure, operations of the UE (or main radio) described above may be performed regardless of the order, and the entity that performs the operations may obviously be either the UE or the main radio.

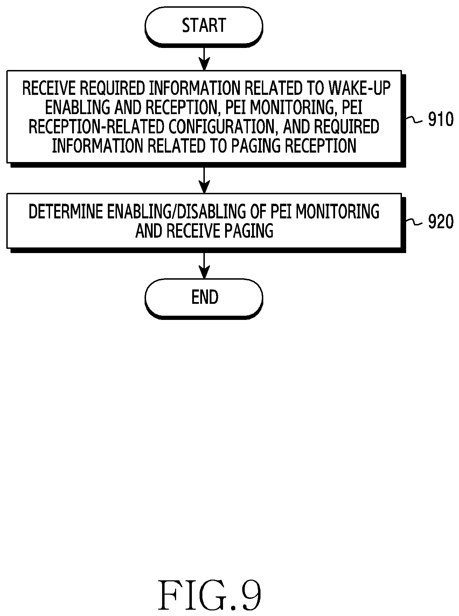

FIG. 9 is a flow chart illustrating an operation by a UE having a wake-up receiver for receiving a PEI according to various embodiments of the disclosure. More specifically, FIG. 9 is a flow chart illustrating an operation for PEI enabling and disabling and PEI and paging reception by a UE having a wake-up receiver according to various embodiments of the disclosure.

In operation 910, a UE may receive a wake-up enabling signal from a base station to receive a wake-up signal by using a wake-up receiver. Alternatively, the UE may receive, from the base station, a wake-up disabling signal which prohibits the wake-up signal from being received any longer by using the wake-up receiver. According to an embodiment, the UE may receive information required for wake-up signal reception from the base station. According to an embodiment, the UE may receive, from the base station, a signal for indicating whether the wake-up receiver is used or configuration for reception of the wake-up signal. In addition, the UE may receive, from the base station, information required to enable or disable PEI monitoring, required information related to PEI reception, and information required to paging reception.

In operation 920, according to an embodiment of the disclosure, the UE may receive the wake-up signal, determine whether to enable or disable monitoring of the PEI, and receive paging after reception the PEI according to whether the PEI monitoring is enabled or disabled. According to an embodiment, the UE may determine whether to enable or disable the PEI monitoring, and receive the PEI according to the determination. According to an embodiment, when the wake-up receiver is configured or enabled and is turned on so that the wake-up signal can be found and the wake-up signal is received, the UE may receive paging in the PF/PO according to the above-described various embodiments of the disclosure. According to an embodiment, when the wake-up receiver is not configured or is disabled, the UE may receive paging in a PF/PO determined based on the existing paging reception scheme of the UE.

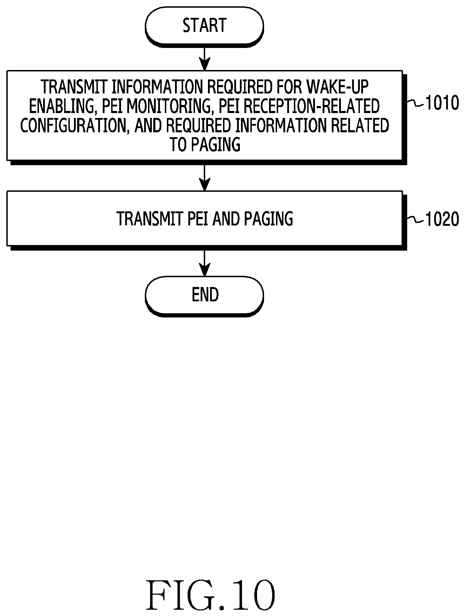

FIG. 10 is a flow chart illustrating an operation by a base station for transmitting a PEI according to various embodiments of the disclosure. More specifically, FIG. 10 is a flow chart illustrating an operation for transmitting a PEI and paging by a base station according to various embodiments of the disclosure.

In operation 1010, a base station may transmit a wake-up enabling signal a UE to receive a wake-up signal by using a wake-up receiver. Alternatively, the base station may transmit, to the UE, a wake-up disabling signal which prohibits the wake-up signal from being received any longer by using the wake-up receiver. According to an embodiment, the base station may transmit information required for wake-up signal reception to the UE. According to an embodiment, the base station may transmit, to the UE, a signal for indicating whether the wake-up receiver is used or configuration for reception of the wake-up signal. In addition, according to an embodiment, the base station may transmit, to the UE, information required to enable or disable PEI monitoring, related information required for PEI reception, and information required to paging reception. According to an embodiment, the base station may transmit information required to receive paging to the UE.

In operation 1020, the base station may transmit a PEI and paging according to the above-described various embodiments of the disclosure. According to an embodiment, when the wake-up receiver is configured or enabled and is turned on so that the wake-up signal can be found and the wake-up signal is transmitted so that the UE can receive the wake-up signal, the base station may transmit the PEI according to various embodiments of the disclosure. In addition, according to an embodiment, the base station may transmit paging in the PF/PO according to various embodiments of the disclosure. According to an embodiment, when the base station does not configure the wake-up receiver for the UE or configures the wake-up receiver to be disabled, the base station may transmit paging in a PF/PO determined based on the existing paging reception scheme of the UE.

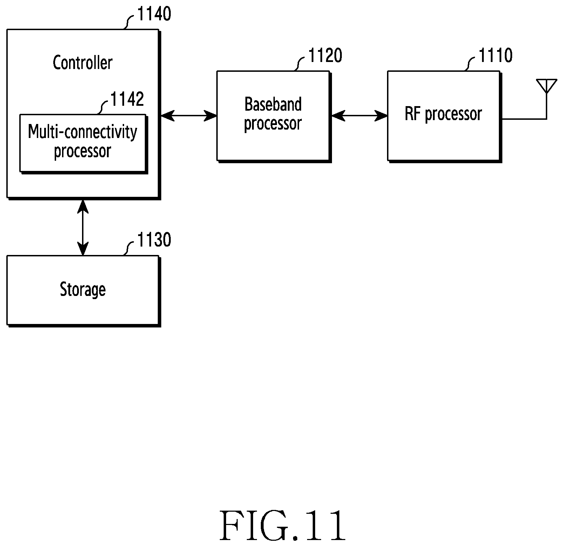

FIG. 11 illustrates a functional structure of a UE according to various embodiments of the disclosure.

Referring to FIG. 11, the UE may include a radio frequency (RF) processor 1110, a baseband processor 1120, a storage 1130, and a controller 1140.

The RF processor 1110 may perform a function for transmitting and receiving a signal via a wireless channel, such as band conversion and amplification of the signal. That is, the RF processor 1110 may up-convert a baseband signal provided from the baseband processor 1120 to an RF band signal, may transmit the same through an antenna, and may down-convert an RF band signal received through the antenna to a baseband signal. For example, the RF processor 1110 may include a transmission filter, a reception filter, an amplifier, a mixer, an oscillator, a digital-to-analog converter (DAC), an analog-to-digital converter (ADC), and the like. Although only one antenna is illustrated in FIG. 11, the UE may include multiple antennas. In addition, the RF processor 1110 may include multiple RF chains. Furthermore, the RF processor 1110 may perform beamforming. For the beamforming, the RF processor 1110 may adjust the phase and magnitude of each of signals transmitted and received through multiple antennas or antenna elements. In addition, the RF processor may perform MIMO, and may receive multiple layers when performing an MIMO operation.

The baseband processor 1120 may perform functions of conversion between baseband signals and bitstrings according to the physical layer specifications of the system. For example, during data transmission, the baseband processor 1120 may encode and modulate a transmitted bitstring to generate complex symbols. In addition, during data reception, the baseband processor 1120 may restore the received bit stream through demodulation and decoding of the baseband signal provided from the RF processor 1110. For example, when following the orthogonal frequency division multiplexing (OFDM) scheme, during data transmission, the baseband processor 1120 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, in case of data reception, the baseband processor 1120 may split a baseband signal provided from the RF processor 1110 at the OFDM symbol level, may restore signals mapped to subcarriers through a fast Fourier transform (FFT) operation, and may restore a received bitstring through demodulation and decoding.

The baseband processor 1120 and the RF processor 1110 may transmit and receive signals as described above. Therefore, the baseband processor 1120 and the RF processor 1110 may be referred to as a transmitter, a receiver, a transceiver, or a communication unit. Furthermore, at least one of the baseband processor 1120 and the RF processor 1110 may include multiple communication modules to support multiple different radio access technologies. In addition, at least one of the baseband processor 1120 and the RF processor 1110 may include different communication modules to process signals in different frequency bands. For example, the different radio access technologies may include a wireless Local Area Network (LAN) (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 1130 stores basic programs, application programs, and data, such as configuration information, for the operation of the UE. In particular, the storage 1130 may store information related to the second access node which performs wireless communication by using the second wireless access technology. In addition, the storage 1130 provides the stored data at the request of the controller 1140.

The controller (or control unit) 1140 controls the overall operation of the UE. For example, the controller 1140 may transmit/receive signals through the baseband processor 1120 and the RF processor 1110. In addition, the controller1140 records data in the storage 1130 and reads the data from the storage 1130. To this end, the controller 1140 may include at least one processor. For example, the controller 1140 may include a communication processor (CP) configured to perform control for communication, and an application processor (AP) configured to control upper layers such as application programs. The controller 1140 may further include a multi-connectivity processor 1142 which may perform and process multi-connectivity between the storage 1130 and the baseband processor 1120.

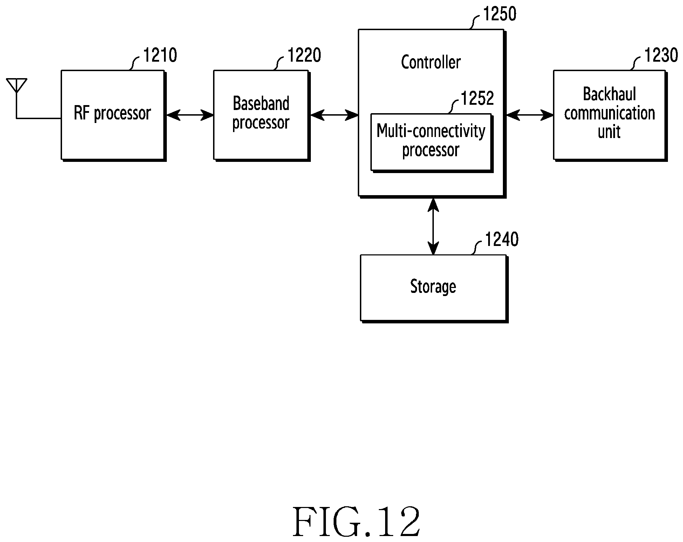

FIG. 12 illustrates a functional structure of a base station according to various embodiments of the disclosure.

As illustrated in FIG. 12, the base station includes an RF processor 1210, a baseband processor 1220, a backhaul communication unit 1230, a storage 1240, and a controller 1250.

The RF processor 1210 may perform a function for transmitting and receiving a signal via a wireless channel, such as band conversion and amplification of the signal. That is, the RF processor 1210 may up-convert a baseband signal provided from the baseband processor 1220 to an RF band signal, may transmit the same through an antenna, and may down-convert an RF band signal received through the antenna to a baseband signal. For example, the RF processor 1210 may include a transmission filter, a reception filter, an amplifier, a mixer, an oscillator, a DAC, and an ADC. Although only one antenna is illustrated in FIG. 12, the first access node may include multiple antennas. In addition, the RF processor 1210 may include multiple RF chains. Furthermore, the RF processor 1210 may perform beamforming. For the beamforming, the RF processor 1210 may adjust the phase and magnitude of each of signals transmitted and received through multiple antennas or antenna elements. The RF processor may transmit one or more layers to perform a downward MIMO operation.

The baseband processor 1220 may perform functions of conversion between baseband signals and bitstrings according to the physical layer specifications of a first radio access technology. For example, during data transmission, the baseband processor 1220 may encode and modulate a transmitted bitstring to generate complex symbols. In addition, during data reception, the baseband processor 1220 may restore the received bit stream through demodulation and decoding of the baseband signal provided from the RF processor 1210. For example, when following the OFDM scheme, during data transmission, the baseband processor 1220 may encode and modulate a transmitted bitstring to generate complex symbols, may map the complex symbols to subcarriers, and may configure OFDM symbols through an IFFT operation and CP insertion. In addition, during data reception, the baseband processor 1220 may split a baseband signal provided from the RF processor 1210 at the OFDM symbol level, may restore signals mapped to subcarriers through FFT operation, and may restore a received bitstring through demodulation and decoding. The baseband processor 1220 and the RF processor 1210 may transmit and receive signals as described above. Therefore, the baseband processor 1220 and the RF processor 1210 may be referred to as a transmitter, a receiver, a transceiver, a communication unit, or a wireless communication unit.

The backhaul communication unit 1230 provides an interface for performing communication with other nodes in the network. That is, the backhaul communication unit 1230 may convert bitstrings transmitted from the main base station to other nodes (for example, auxiliary base station, core network) to physical signals, and may convert physical signals received from the other nodes to bitstrings.

The storage 1240 may store basic programs, application programs, and data, such as configuration information, for the operation of the main base station. In particular, the storage 1240 may store information on bearers allocated to the connected UE, measurement results reported from the connected UE, and the like. In addition, the storage 1240 may store information serving as criteria to determine whether to provide multi-connectivity to a UE or to suspend the same. In addition, the storage 1240 provides the stored data at the request of the controller 1250.

The controller (or control unit) 1250 controls the overall operation of the main base station. For example, the controller 1250 may transmit/receive signals through the baseband processor 1220 and the RF processor 1210 or through the backhaul communication unit 1230. In addition, the controller 1250 records data in the storage 1240 and reads the data from the storage 1240. To this end, the controller 1250 may include at least one processor. The controller 1250 may further include a multi-connectivity processor 1252 which may performs and process multi-connectivity between the storage 1240, the backhaul communication unit 1230, and the baseband processor 1220.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including random access memory and flash memory, read only memory (ROM), electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the drawings in which methods of the disclosure are described, the order of the description does not always correspond to the order in which operations are performed, and the order relationship between the operations may be changed or the operations may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. For example, a part or all of an embodiment may be combined with a part or all of one or more other embodiments, and it is natural that an implementation of such combination also corresponds to an embodiment proposed by the disclosure. Therefore, the scope of the disclosure should not be defined as being limited to the embodiments set forth herein, but should be defined by the appended claims and equivalents thereof.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents.

## Claims

1.  A user equipment (UE) in a wireless communication system, the UE comprising:

    a transceiver; and
    a controller coupled to the transceiver, and configured to:

    receive, from a base station, a wake-up signal (WUS) indicating a first subgroup of multiple UEs,

in case that a paging early indication (PEI) monitoring is activated, receive, from the base station, a PEI indicating a second subgroup of multiple UEs, and
receive, from the base station, a paging,

wherein the UE is included in the first subgroup or the second subgroup.

2. The UE of claim 1, wherein, in case that the PEI monitoring is activated, the first subgroup is included in the second subgroup.

3. The UE of claim 1, wherein, in case that the PEI monitoring is deactivated, the UE is included in the first subgroup.

4. The UE of claim 1,

wherein the PEI is received after a WUS frame offset from a frame in which the WUS is received, and
wherein the paging is received after a PEI frame offset from a frame in which the PEI is received.

5. A base station in a wireless communication system, the base station comprising:

a transceiver; and
a controller coupled to the transceiver, and configured to:

transmit, to a user equipment (UE), a wake-up signal (WUS) indicating a first subgroup of multiple UEs,
in case that a paging early indication (PEI) monitoring is activated, transmit, to the UE, a PEI indicating a second subgroup of multiple UEs, and
transmit, to the UE, a paging,

wherein the UE is included in the first subgroup or the second subgroup.

6. The base station of claim 5, wherein, in case that the PEI monitoring is activated, the first subgroup is included in the second subgroup.

7. The base station of claim 5, wherein, in case that the PEI monitoring is deactivated, the UE is included in the first subgroup.

8. The base station of claim 5,

wherein the PEI is transmitted after a WUS frame offset from a frame in which the WUS is received, and
wherein the paging is transmitted after a PEI frame offset from a frame in which the PEI is received.

9. A method performed by a user equipment (UE) in a wireless communication system, the method comprising:

receiving, from a base station, a wake-up signal (WUS) indicating a first subgroup of multiple UEs;
in case that paging early indication (PEI) monitoring is activated, receiving, from the base station, a PEI indicating a second subgroup of multiple UEs; and
receiving, from the base station, a paging,
wherein the UE is included in the first subgroup or the second subgroup.

10. The method of claim 9, wherein, in case that the PEI monitoring is activated, the first subgroup is included in the second subgroup.

11. The method of claim 9, wherein, in case that the PEI monitoring is deactivated, the UE is included in the first subgroup.

12. The method of claim 9,

wherein the PEI is received after a WUS frame offset from a frame in which the WUS is received, and
wherein the paging is received after a PEI frame offset from a frame in which the PEI is received.

13. A method performed by a base station in a wireless communication system, the method comprising:

transmitting, to a user equipment (UE), a wake-up signal (WUS) indicating a first subgroup of multiple UEs;

in case that paging early indication (PEI) monitoring is activated, transmitting, to the UE, a PEI indicating a second subgroup of multiple UEs; and

transmitting, to the UE, a paging,

wherein the UE is included in the first subgroup or the second subgroup.

14. The method of claim 13, wherein, in case that the PEI monitoring is activated, the first subgroup is included in the second subgroup.

15. The method of claim 13, wherein, in case that the PEI monitoring is deactivated, the UE is included in the first subgroup.

FIG.1

FIG.2

UE gNB

①   Random access preamble message 1 (310)  →

  ←   Random access response message 2 (320)   ②

③   Scheduled transmission message 3 (330)   →

  ←   Contention resolution message 4 (340)   ④

# FIG.3

UE
(401)

gNB
(402)

UE capability information request (410)

UE capability information (420)

FIG.4

UE

Main radio
(OFF / ON)  (504)

(503)

↑ Trigger

gNB  Wake-up signal
(ON / OFF) (501)

Low power
wake-up receiver  (502)

UE

Main radio
(ON)  (506)

gNB  Data (505)

Low power
wake-up receiver

# FIG.5

Subgroup 0    Subgroup 1    ......    Subgroup K-1

Subgroup
indicated by WUS

# FIG.6

Sub-subgroup A
indicated by WUS

Subgroup 0

Subgroup 1

......

Subgroup K-1

# FIG.7

When PEI monitoring is enabled

Frame-level offset
(WUS-FrameOffset)

Frame-level offset
(pei-FrameOffset)

Cell-specific PF

Reference point

WUS

Subframe offset
(firstPDCCH-MonitoringOccasionOfPEI-O)

First PDCCH
MO of PEI-O

$1^{th}$ PO    $2^{th}$ PO    $3^{th}$ PO    $4^{th}$ PO

When PEI monitoring is disabled

Frame-level offset
(WUS-FrameOffset)

Cell-specific PF

WUS

$1^{th}$ PO    $2^{th}$ PO    $3^{th}$ PO    $4^{th}$ PO

FIG.8

EP 4 765 970 A1

START

RECEIVE REQUIRED INFORMATION RELATED TO WAKE-UP ENABLING AND RECEPTION, PEI MONITORING, PEI RECEPTION-RELATED CONFIGURATION, AND REQUIRED INFORMATION RELATED TO PAGING RECEPTION ～ 910

DETERMINE ENABLING/DISABLING OF PEI MONITORING AND RECEIVE PAGING ～ 920

END

FIG.9

START

TRANSMIT INFORMATION REQUIRED FOR WAKE-UP ENABLING, PEI MONITORING, PEI RECEPTION-RELATED CONFIGURATION, AND REQUIRED INFORMATION RELATED TO PAGING ~1010

TRANSMIT PEI AND PAGING ~1020

END

# FIG.10

_1140_

Controller

_1142_

Multi-connectivity
processor

_1120_

Baseband
processor

_1110_

RF processor

_1130_

Storage

# FIG.11

FIG.12

## INTERNATIONAL SEARCH REPORT

| International application No. |
| --- |
| **PCT/KR2024/013246** |

| **A.** | **CLASSIFICATION OF SUBJECT MATTER** |
| --- | --- |

**H04W 68/02**(2009.01)i; **H04W 52/02**(2009.01)i; **H04W 76/28**(2018.01)i

According to International Patent Classification (IPC) or to both national classification and IPC

| **B.** | **FIELDS SEARCHED** |
| --- | --- |

Minimum documentation searched (classification system followed by classification symbols)

H04W 68/02(2009.01); H04W 68/00(2009.01); H04W 76/15(2018.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단말(user equipment), 서브그룹(subgroup), WUS(wake up signal), PEI(paging early indication), 모니터링(monitoring)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | QUALCOMM INCORPORATED. Use of low-power receiver in idle mode procedures. R2-2307082, 3GPP TSG-RAN WG2 Meeting #123. Toulouse, France. 11 August 2023.<br>See section 2.1, figure 1. | 1-15 |
| Y | WO 2023-065221 A1 (ZTE CORPORATION) 27 April 2023 (2023-04-27)<br>See claims 20-23. | 1-15 |
| A | WO 2023-004207 A2 (FUTUREWEI TECHNOLOGIES, INC.) 26 January 2023 (2023-01-26)<br>See paragraphs [0058]-[0170]; claims 1-31; and figures 1-19. | 1-15 |
| A | US 2022-0256632 A1 (SAMSUNG ELECTRONICS CO., LTD.) 11 August 2022 (2022-08-11)<br>See paragraphs [0073]-[0301]; claims 1-20; and figures 1-20. | 1-15 |
| A | WO 2023-080521 A1 (LG ELECTRONICS INC.) 11 May 2023 (2023-05-11)<br>See paragraphs [0176]-[0330]; claims 1-15; and figures 9-16. | 1-15 |

☐ Further documents are listed in the continuation of Box C.          ☑ See patent family annex.

| | | |
| --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" | document member of the same patent family |

| Date of the actual completion of the international search | Date of mailing of the international search report |
| --- | --- |
| **16 December 2024** | **16 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 765 970 A1**

### INTERNATIONAL SEARCH REPORT
**Information on patent family members**

International application No.

**PCT/KR2024/013246**

| Patent document cited in search report | | | Publication date (day/month/year) | Patent family member(s) | | | Publication date (day/month/year) |
|---|---|---|---|---|---|---|---|
| WO | 2023-065221 | A1 | 27 April 2023 | CN | 118202733 | A | 14 June 2024 |
| | | | | EP | 4342243 | A1 | 27 March 2024 |
| | | | | EP | 4342243 | A4 | 12 June 2024 |
| | | | | JP | 2024-530566 | A | 23 August 2024 |
| | | | | KR | 10-2024-0022500 | A | 20 February 2024 |
| | | | | US | 2024-0121755 | A1 | 11 April 2024 |
| WO | 2023-004207 | A2 | 26 January 2023 | US | 2024-0334540 | A1 | 03 October 2024 |
| | | | | WO | 2023-004207 | A3 | 13 April 2023 |
| US | 2022-0256632 | A1 | 11 August 2022 | CN | 116941325 | A | 24 October 2023 |
| | | | | EP | 4275450 | A1 | 15 November 2023 |
| | | | | WO | 2022-169343 | A1 | 11 August 2022 |
| WO | 2023-080521 | A1 | 11 May 2023 | EP | 4429346 | A1 | 11 September 2024 |
| | | | | KR | 10-2024-0046555 | A | 09 April 2024 |

Form PCT/ISA/210 (patent family annex) (July 2022)